# EUROPEAN PATENT APPLICATION

(11) **EP 4 395 335 A1**
(43) Date of publication of application: **03.07.2024**
(21) Application number: 22892998.0
(22) Date of filing: 07.09.2022
(51) Int. Cl.: H04N 21/43, H04N 21/431, H04N 21/435, H04N 21/485, H04N 21/472, H04N 21/845

(54) **ELECTRONIC DEVICE FOR CHANGING SYNCHRONIZED CONTENTS, AND METHOD THEREFOR**

(30) Priority: 10.11.2021 KR 20210154336
(71) Applicant: Samsung Electronics Co., Ltd., Suwon-si, Gyeonggi-do 16677 (KR)
(72) Inventor: KANG, Jiyoung, Suwon-si Gyeonggi-do 16677 (KR); KIM, Sojin, Suwon-si Gyeonggi-do 16677 (KR); SEO, Kyunghwa, Suwon-si Gyeonggi-do 16677 (KR); CHOI, Yeongjune, Suwon-si Gyeonggi-do 16677 (KR); KIM, Sunho, Suwon-si Gyeonggi-do 16677 (KR); KIM, Jisu, Suwon-si Gyeonggi-do 16677 (KR)
(74) Representative: Nederlandsch Octrooibureau
(86) International application number: PCT/KR2022/013477
(87) International publication number: WO 2023/085575

(57) **Abstract**

A processor of an electronic device, according to one embodiment, can receive a request for changing content acquired on the basis of a shooting input. The processor can identify, in response to receiving the request, whether the contents are synchronized on the basis of metadata of the content. The processor can display, on a display of the electronic device and while in a first state of having identified that the contents are synchronized, a first screen comprising a visual object for receiving a first time section to be used to divide all of the synchronized content. The processor can display, on the display while in a second state different from the first state, independently from the visual object, a second screen for receiving a second time section to be used to divide any one of the content.

## Description

### [Technical Field]

The following descriptions relate to an electronic device for changing synchronized contents, and method therefor.

### [Background Art]

With the recent development of electronic technology, functions performed by electronic devices are increasing. For example, to support users to create various types of multimedia content, the number of cameras included in an electronic device and the performance of cameras are improving. For example, in order to easily shoot subjects at different distances, the electronic device may include a plurality of cameras with different Field-Of-Views(FOVs).

### [Disclosure]

### [Technical Solution]

An electronic device according to an embodiment may include a display, memory for storing one or more instructions, and at least one processor operably coupled to the display and the memory. The one or more instructions, when executed, may cause the at least one processor to receive a request to change contents stored in the memory and obtained based on a shooting input. The one or more instructions, when executed, may cause the at least one processor, in response to the receiving the request, to identify whether the contents are synchronized based on metadata of the contents. The one or more instructions, when executed, may cause the at least one processor, in a first state identifying that the contents are synchronized, to display a first screen including a visual object to receive a first time section to be used to segment all of the synchronized contents in the display. The one or more instructions, when executed, may cause the at least one processor, in a second state different from the first state, to display a second screen to receive a second time section to be used to segment one of the contents in the display, independent to the visual object.

A method of an electronic device according to an embodiment may include receiving a request to change contents stored in the memory and obtained based on a shooting input. The method may include, in response to receiving the request, identifying whether the contents are synchronized based on metadata of the contents. The method may include, in a first state identifying that the contents are synchronized, displaying a first screen including a visual object to receive a first time section to be used to segment all of the synchronized contents in a display of the electronic device. The method may include, in a second state different from the first state, displaying a second screen to receive a second time section to be used to segment one of the contents, in the display.

### [ Description of the Drawings ]

FIG. 1 is a block diagram of an electronic device according to an embodiment.
FIGS. 2A to 2B are exemplary diagrams for describing an operation performed by an electronic device according to an embodiment to obtain synchronized contents.
FIG. 3 is a diagram illustrating an example of a screen displayed by an electronic device according to an embodiment based on synchronized content.
FIG. 4 is an exemplary diagram for describing an operation in which an electronic device according to an embodiment compares time sections in which each of videos of contents is shot.
FIG. 5 is a diagram illustrating an example of a screen displayed by an electronic device according to an embodiment to change synchronized contents.
FIGS. 6A to 6D are diagrams illustrating different examples of screens displayed by an electronic device according to an embodiment based on a user input performed on the screen of FIG. 5.
FIGS. 7A to 7B are exemplary diagrams for describing an operation in which an electronic device according to an embodiment segments synchronized contents based on a screen of FIG. 5.
FIG. 8 is an exemplary diagram for describing an operation in which an electronic device according to an embodiment adjusts displaying any one of videos of synchronized contents based on a screen of FIG. 5.
FIG. 9 is an exemplary diagram for describing an operation in which an electronic device according to an embodiment changes audio signals included in synchronized contents based on a screen of FIG. 5.
FIG. 10 is a diagram illustrating an example of screens displayed by an electronic device according to an embodiment to change independent contents.
FIG. 11 is a flowchart describing an operation performed by an electronic device according to an embodiment.
FIG. 12 is a flowchart describing an operation performed by an electronic device to determine whether contents are synchronized based on metadata of content, according to an embodiment.

### [Mode for Invention]

Hereinafter, various embodiments of the present document will be described with reference to the accompanying drawings.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

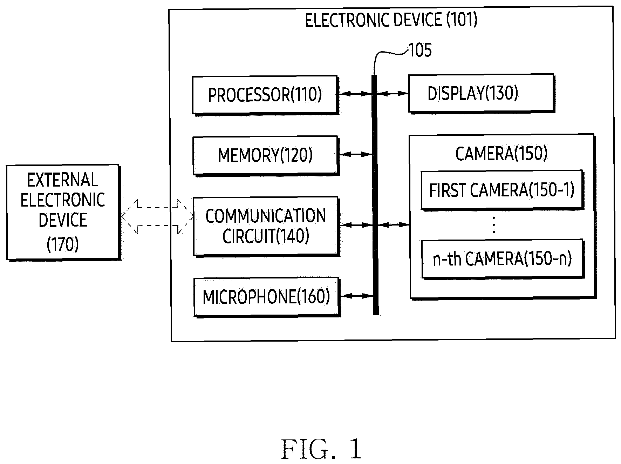

FIG. 1 is a block diagram of an electronic device 101 according to an embodiment. FIG. 1 is a diagram illustrating the electronic device 101 and an external electronic device 170 connected to each other based on a network. Referring to FIG. 1, an exemplary situation is shown in which the electronic device 101 and the external electronic device 170 are connected to each other based on a wired network and/or a wireless network.

The wired network may include a network such as the Internet, a Local Area Network (LAN), a Wide Area Network (WAN), Ethernet, or a combination thereof. The wireless network may include a network such as Long Term Evolution (LTE), 5g New Radio (NR), Wireless Fidelity (WiFi), Zigbee, a Near Field Communication (NFC), Bluetooth, Bluetooth Low-Energy BLE), or a combination thereof. Although it has been shown that the electronic device 101 and the external electronic device 170 are directly connected, the electronic device 101 and the external electronic device 170 may be indirectly connected through one or more routers and/or an AP (Access Point).

Referring to FIG. 1, the electronic device 101 and the external electronic device 170 may be a terminal owned by at least one user. The terminal may include, for example, a personal computer (PC) such as a laptop and a desktop, and a smart accessory such as a smartphone, a smartpad, a tablet PC (personal computer), a smartwatch and a head-mounted device (HMD).

Referring to FIG. 1, the electronic device 101 according to an embodiment may include at least one of a processor 110, a memory 120, a display 130, a communication circuit 140, a camera 150, or a microphone 160. The processor 110, the memory 120, the display 130, the communication circuit 140, the camera 150, and the microphone 160 may be electronically and/or operably coupled with each other by an electronic component such as a communication bus 105. Although shown based on different blocks, an embodiment is not limited thereto, and some of the hardware components shown in FIG. 1 (e.g., at least some of the processor 110, the memory 120, and the communication circuit 140) may be included in a single integrated circuit (SOC), such as a System on a Chip (SoC). The type and/or number of hardware components included in the electronic device 101 are not limited to those shown in FIG. 1. For example, the electronic device 101 may include only some of the hardware components shown in FIG. 1.

A processor 110 of an electronic device 101 according to an embodiment may include a hardware component for processing data based on one or more instructions. Hardware component for processing data may include, for example, an Arithmetic and Logic Unit (ALU), a Floating Point Unit (FPU), a Field Programmable Gate Array (FPGA), and/or a Central Processing Unit (CPU). The number of the processor 110 may be one or more. For example, the processor 110 may have a structure of a multi-core processor such as a dual core, a quad core, or a hexa core.

The memory 120 of an electronic device 101 according to an embodiment may include a hardware component for storing data and/or instruction inputted and/or outputted to a processor 110. The memory 120, for example, may include a Volatile Memory such as a Random-Access Memory (RAM) and/or a Non-Volatile Memory such as a Read-Only memory (ROM). The Volatile memory, for example, may include at least one of a Dynamic RAM (DRAM), a Static RAM (SRAM), a Cache RAM, and a Pseudo SRAM (PSRAM). The Nonvolatile memory, for example, may include at least one of a Programmable ROM (PROM), an Erasable PROM (EPROM), an Electrically Erasable PROM (EEPROM), a flash memory, a hard disk, a compact disk, and an Embedded Multi-media Card (eMMC).

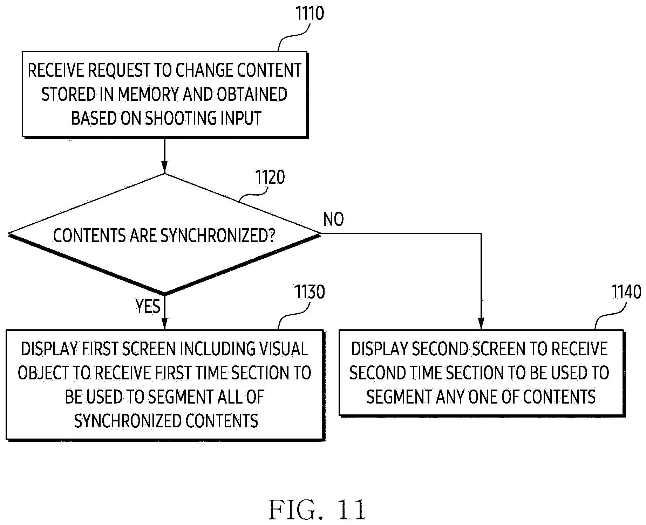

In the memory 120 of the electronic device 101 according to an embodiment, one or more instructions indicating an operation to be performed by the processor 110 on data may be stored. A set of instructions may be referred to as firmware, operating system, process, routine, sub-routine and/or application. For example, the electronic device 101 and/or the processor 110 of the electronic device 101 may perform an operation of the electronic device 101 described later (e.g., at least one of operations of FIGS. 11 to 12) by executing a set of plurality instructions distributed in the form of an application. Hereinafter, the installation of an application in the electronic device 101 may mean that one or more applications provided in the form of the application are stored in the memory 120 of the electronic device 101, and the one or more applications are stored in an executable format (e.g., a file with an extension preset by the operating system of the electronic device 101).

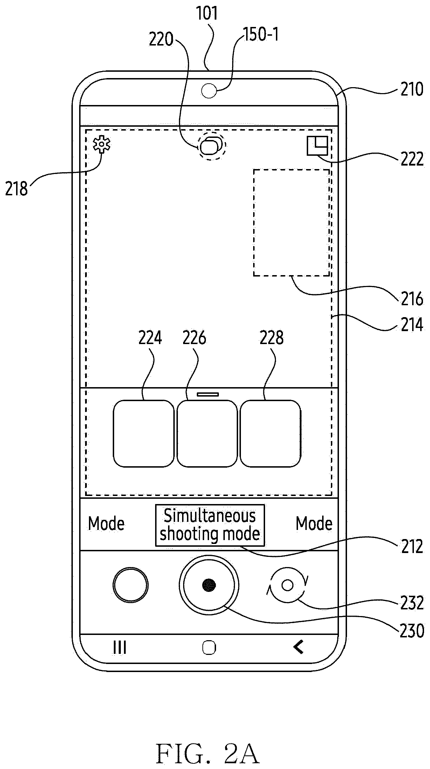

The display 130 of the electronic device 101 according to an embodiment may output visualized information (for example, at least one of the screens of FIGS. 2A to 2B, FIG. 3, FIG. 5, FIGS. 6A to 6D, FIGS. 7Aa to 7B, and/or FIGS. 8 to 10) to a user. For example, the display 130 may output visualized information to the user by being controlled by a controller such as a Graphic Processing Unit (GPU). The display 130 may include a Flat Panel Display (FPD) and/or an electronic paper. The FPD may include a Liquid Crystal Display (LCD), a Plasma Display Panel (PDP), and/or one or more Light Emitting Diodes (LEDs). The LED may include an Organic LED (OLED).

The display 130 of the electronic device 101 according to an embodiment may include a sensor (e.g., a touch sensor panel (TSP)) for detecting an external object (e.g., a user's finger) on the display 130. For example, based on the TSP, the electronic device 101 may detect an external object contacting the display 130 or floating on the display 130. In response to detecting the external object, the electronic device 101 may execute a function associated with a specific visual object corresponding to a position of the external object on the display 130 among the visual objects displayed in the display 130.

The communication circuit 140 of the electronic device 101 according to an embodiment may include a hardware component for supporting transmission and/or reception of an electrical signal between the electronic device 101 and an external electronic device 170. Although only the external electronic device 170 is illustrated, the number of the external electronic devices to which the electronic device 101 is simultaneously connected by using the communication circuit 140 is not limited thereto. The communication circuit 140, for example, may include at least one of a MODEM, an antenna, and an Optic/Electronic(O/E) converter. The communication circuit 140 may support transmission and/or reception of an electrical signal based on various types of protocols such as Ethernet, Local Area Network (LAN), Wide Area Network (WAN), Wireless Fidelity (WiFi), Bluetooth, Bluetooth Low Energy (BLE), ZigBee, Long Term Evolution (LTE), and 5G New Radio (NR).

The camera 150 of the electronic device 101 according to an embodiment may include one or more optical sensors (e.g., a Charged Coupled Device (CCD) sensor, a Complementary Metal Oxide Semiconductor (CMOS) sensor) generating an electrical signal indicating the color and/or brightness of light. A plurality of optical sensors included in the camera 150 may be disposed in the form of 2 dimensional array. The camera 150 may generate 2D frame data corresponding to light reaching the optical sensors of 2D array by substantially simultaneously obtaining electrical signals of each of the plurality of optical sensors. For example, a photo data captured by using the camera 150 may mean one 2D frame data obtained from the camera 150. For example, video data captured by using the camera 150 may mean a sequence of a plurality of 2D frame data obtained according to a frame rate by the camera 150.

In an embodiment, a camera 150 may include a flashlight and/or an infrared diode emitting light to the outside of the camera 150. The camera 150 may include one or more infrared light sensors detecting the intensity of infrared light. The camera 150 may measure the degree to which the infrared light emitted from the infrared diode is reflected by using the one or more infrared light sensors. In an embodiment, the degree to which the infrared light is reflected may be substantially simultaneously measured by a plurality of infrared light sensors included in the camera 150. The camera 150 may generate frame data including a depth value based on the degree to which infrared light measured by a plurality of infrared optical sensors is reflected. The depth value may be associated with a distance between a subject captured by the camera 150 and/or included in frame data and the camera 150.

The number of cameras 150 included in the electronic device 101 according to an embodiment may be one or more. Referring to FIG. 1, the electronic device 101 may include n cameras (150-1, ..., 150-n). The n cameras (150-1, ..., 150-n) may have an independent direction and/or a Field-Of-View (FOV) within the electronic device 101. For example, a first camera 150-1 may be exposed at least partially to outside on a surface on which the display 130 is disposed, among surfaces of the housing of the electronic device 101. The surface on which the display 130 is disposed, for example, is referred to as a front surface. Hereinafter, a camera including a lens exposed to the outside through a portion of the front surface is referred to as a front camera. In the above example, n-1 cameras distinguished from the first camera 150-1 may be exposed to the outside at least partially on another surface distinguished from the surface on which the display 130 is disposed. The other surface, for example, may include a rear surface opposed to the front surface. Hereinafter, a camera including a lens exposed to the outside through a portion of the rear surface is referred to as a back side camera or a rear camera.

An electronic device 101 according to an embodiment may include a microphone 160 outputting an electrical signal indicating vibration of the atmosphere. For example, the microphone 160 of the electronic device 101 may output an audio signal including a user's speech. The audio signal outputted from the microphone 160 may be processed by the processor 110 of the electronic device 101 and/or stored in the memory 120.

Although not shown, the electronic device 101 according to an embodiment may include an output means for outputting information in another form other than in a visualized form. For example, the electronic device 101 may include a speaker for outputting an acoustic signal. The electronic device 101 may include another output means for outputting information in another form other than a visual form and an audible form. For example, the electronic device 101 may include a motor for providing haptic feedback based on vibration.

The electronic device 101 according to an embodiment may obtain at least two video data from at least two cameras by simultaneously controlling the at least two cameras (e.g., a front camera and a rear camera) among the n cameras (150-1, ..., and 150-n). In a state in which at least two cameras are simultaneously controlled, the electronic device 101 may obtain an audio signal by using the microphone 160. The electronic device 101 may generate at least two contents by coupling the obtained audio signal with each of at least two video data. At least two generated contents may be stored in the memory 120 of the electronic device 101.

Hereinafter, a content and/or a multimedia content may mean coupling of video data and an audio signal synchronized with each other. For example, the content is a file based on a preset format, such as MPEG-4, and may be stored in the memory 120. Hereinafter, video data included in the content may be referred to as a video. An operation in which an electronic device 101 according to an embodiment obtains a plurality of contents by simultaneously controlling at least two cameras among the n cameras (150-1, ..., 150-n) included in the electronic device 101 or simultaneously controlling one or more cameras of the n cameras (150-1, ..., 150-n) included in the electronic device 101 and one or more cameras included in an external electronic device 170 will be described later with reference to FIGS. 2A to 2B.

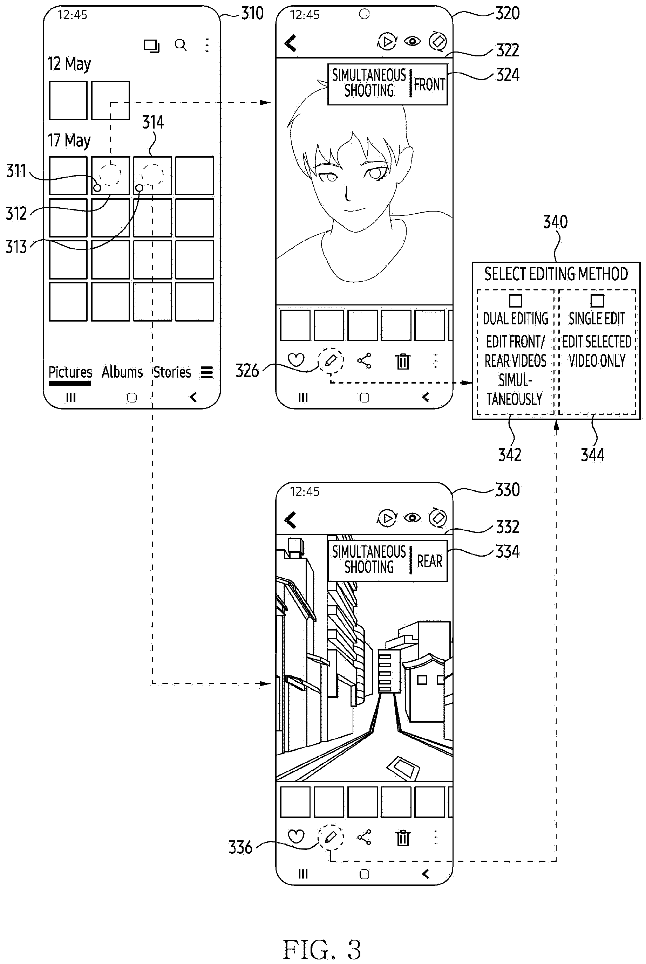

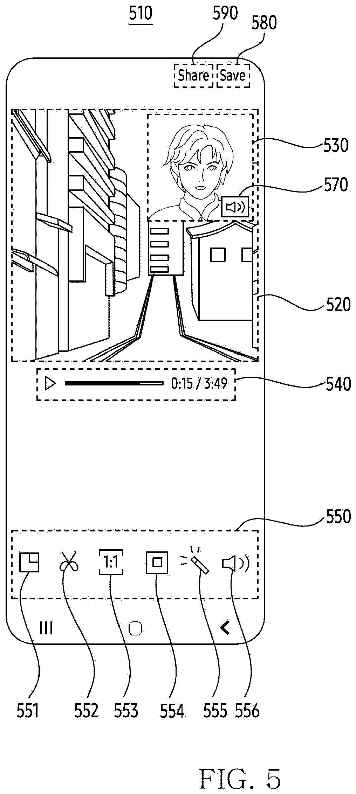

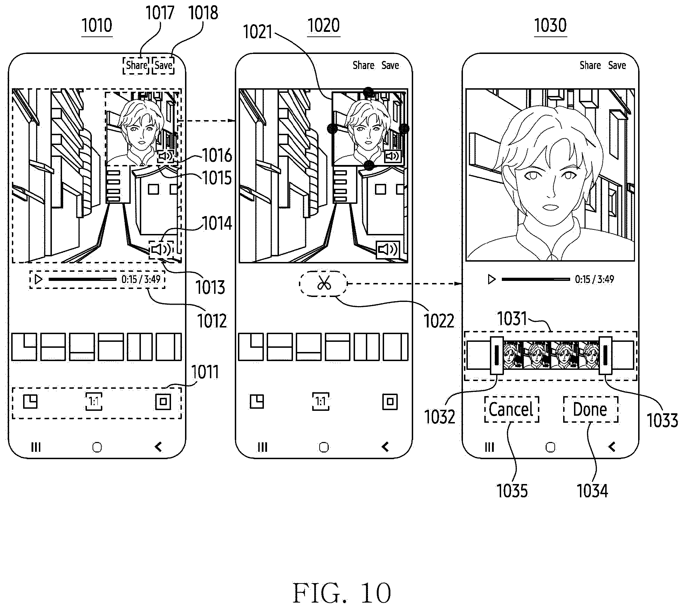

The electronic device 101 according to an embodiment may provide a User Interface (UI) for changing contents substantially simultaneously shot to a user. Through the UI, the electronic device 101 may execute a function of changing at least one of contents while maintaining synchronization of the contents according to being substantially simultaneously shot. The synchronization of the contents may mean that the contents include data indicating that the contents may be simultaneously reproduced by the electronic device 101. For example, the data may be included in at least one metadata among the contents. An operation in which the electronic device 101 according to an embodiment determines whether contents are substantially simultaneously shot and/or whether contents are synchronized will be described later with reference to FIGS. 3 to 4. The UI displayed by the electronic device 101 according to an embodiment to change synchronized content will be described later with reference to FIGS. 5 to 9. Another UI displayed by the electronic device 101 according to an embodiment to change unsynchronized content will be described later with reference to FIG. 10.

Hereinafter, an operation in which the electronic device 101 according to an embodiment obtains synchronized contents will be described with reference to FIGS. 2A to 2B.

FIGS. 2A to 2B are exemplary diagrams for describing an operation performed by an electronic device 101 according to an embodiment to obtain synchronized contents. Referring to FIGS. 2A to 2B, screens 210 and 240 displayed on a display (e.g., the display 130 of FIG. 1) by the electronic device 101 according to an embodiment are illustrated. Hereinafter, the screen may mean a User Interface (UI) displayed within at least a part of the display. The screen may include, for example, Activity of an Android operating system. The electronic device 101 according to an embodiment may obtain synchronized content by using at least one of the screens 210 and 240. The screens 210 and 240 of FIGS. 2A to 2B, for example, may be displayed by the electronic device 101 while executing an application stored in the electronic device 101, such as a camera application and/or a video call application.

Referring to FIG. 2A, within the screen 210, the electronic device 101 according to an embodiment may display a visual object 212 indicating a mode for simultaneously controlling at least two cameras among a plurality of cameras (e.g., n cameras 150-1, ..., and 150-n in FIG. 1) included in the electronic device 101. The screen 210 may be displayed by the electronic device 101 in response to receiving a user input for executing a preset application such as a camera application and/or a user input for controlling the camera in a video call application. For example, by using text (e.g., a simultaneous shooting mode) included in the visual object 212, the electronic device 101 may indicate that it operates based on a mode in which at least two cameras are simultaneously controlled. The user may change a mode of the electronic device 101 to another mode distinguished from the mode by clicking and/or touching another visual object distinguished from the visual object 212.

The electronic device 101 according to an embodiment may display preview images corresponding to at least a portion of each of images received from a plurality of cameras by using a first area 214, a second area 216, a third area 224, a fourth area 226, and a fifth area 228 on the screen 210. For example, the electronic device 101 may display a first preview image and a second preview image based on images outputted from two cameras selected by a user among a plurality of cameras included in the electronic device 101 in each of the first area 214 and the second area 216. For example, the second preview image displayed in the second area 216 may correspond to at least a portion of images received from a camera 150-1 (e.g., the front camera) including a lens disposed along a direction of a front surface of the electronic device 101. For example, preview images displayed in the third area 224, the fourth area 226, and the fifth area 228 may correspond to at least portion of the images received from each of the other cameras, including lenses disposed along a direction of a rear surface of the electronic device 101. For example, the first preview image displayed in the first area 214 may correspond to a preview image selected by the user among preview images displayed in the third area 224 to the fifth area 228. The first preview images and the second preview images displayed in the first area 214 and the second area 216 may indicate two contents to be acquired by the electronic device 101 and/or two cameras corresponding to the two contents.

The electronic device 101 according to an embodiment may further display visual objects 218, 220, 222, 230, and 232 for receiving a user input associated with at least two contents, along with a plurality of preview images displayed in different areas (e.g., the first area 214 to the fifth area 228) on a screen 210. For example, the visual object 230 may correspond to a visual object for receiving a shooting input, which is a preset user input for obtaining two contents corresponding to each of the first preview image and the second preview image displayed in each of the first area 214 and the second area 216. For example, the shooting input may include a gesture of touching (e.g., tap) and/or clicking on the visual object 230 such as a shutter, included in the screen 210 and provided in the form of an icon and/or text. Referring to FIG. 2A, the electronic device 101 may display a preset icon (e.g., a red circle) indicating recording in the visual object 230. For example, the shooting input may include a gesture of pressing a preset button among one or more buttons exposed to the outside through the housing of the electronic device 101, independently of the visual object 230.

Referring to FIG. 2A, in response to receiving a user input of touching and/or clicking on the visual object 218, the electronic device 101 may display another screen for obtaining one or more pieces of information to be used to control cameras corresponding to each of the first preview image and the second preview image corresponding to each of the first area 214 and the second area 216 based on a shooting input. The one or more pieces of information, for example, may include a frame rate, a resolution, a mode of a flashlight, and/or a magnification of at least one of the cameras.

Referring to FIG. 2A, the electronic device 101 may adjust whether to merge at least two contents obtained based on the shooting input in response to receiving a user input for touching and/or clicking the visual object 220. For example, the visual object 220 may correspond to a visual object for toggling whether to create a single content by merging the at least two contents. Within the single content, for example, based on a Picture-In-Picture (PIP), at least two contents may be disposed by partially overlapping or at least two contents may be disposed in connection.

Referring to FIG. 2A, in response to receiving a user input of touching and/or clicking on the visual object 222, the electronic device 101 may display a list for adjusting a positional relationship of the at least two contents within a single content generated by merging at least two contents obtained based on a shooting input. The list may include one or more visual objects for selecting a PIP layout for merging the at least two contents. Based on the PIP layout selected in the list associated with the visual object 222, the electronic device 101 may adjust a positional relationship between the first area 214 and the second area 216 in which the first preview image and the second preview image are displayed within the screen 210.

Referring to FIG. 2A, the electronic device 101 may switch cameras corresponding to each of the first area 214 and the second area 216 in response to receiving a user input for touching and/or clicking the visual object 232. For example, when a second preview image corresponding to the second area 216 corresponds to the camera 150-1 including a lens disposed along the direction of the front surface of the electronic device 101 and a first preview image corresponding to the first area 214 corresponds to another camera disposed along the direction of the rear surface of the electronic device 101, in response to receiving a user input for touching and/or clicking on the visual object 232, the electronic device 101 may display the second preview image corresponding to at least a portion of the images received from the camera 150-1 in the first area 214, and the first preview image corresponding to at least a portion of the images received from the another camera in the second area 216.

In response to receiving a shooting input, the electronic device 101 according to an embodiment may obtain video signals corresponding to each of two cameras, by simultaneously controlling the two cameras corresponding to each of the first preview image and the second preview image corresponding to each of the first area 214 and the second area 216. In response to receiving the shooting input, the electronic device 101 may display a preset icon (e.g., an icon indicating stop and/or pause) notifying that one or more contents are being obtained, within the visual object 230. According to an embodiment, in response to receiving the shooting input, the electronic device 101 may replace the visual object 230 with another visual object (e.g., the preset icon notifying that one or more contents are being obtained) in a part where the visual object 230 is displayed within the screen 210.

In response to receiving a shooting input, the electronic device 101 according to an embodiment may obtain an audio signal outputted from a microphone within a time section in which the video signals are obtained by using the microphone (e.g., the microphone 160 of FIG. 1). Obtaining of the video signals and the audio signal by the electronic device 101 may be maintained until receiving a user input for touching and/or clicking the visual object 230 again after receiving the shooting input.

In response to receiving a user input for clicking and/or touching a preset icon for stopping acquisition of the video signals and the audio signal based on the shooting input, the e electronic device 101 according to an embodiment may obtain one or more contents based on the accumulated video signals and the audio signal before receiving the user input. For example, in a state of merging contents based on the visual object 220, the electronic device 101 may obtain a single content by merging video signals and audio signal accumulated along a time section before receiving the user input after receiving the shooting input. For example, within the single content, videos indicated by the video signals may be disposed based on a PIP layout selected in a list associated with the visual object 222.

For example, in a state of storing contents independently based on the visual object 220, the electronic device 101 may obtain a plurality of contents corresponding to each of the cameras corresponding to each of the first preview image and the second preview image by coupling the audio signals with each of the video signals accumulated along the time section before receiving the user input after receiving the shooting input. A plurality of obtained contents may be stored in a memory (e.g., the memory 120 of FIG. 1) of the electronic device 101. The electronic device 101 according to an embodiment may store the plurality of contents in a memory with information indicating that the plurality of contents was obtained based on a single shooting input (and/or simultaneous shooting input for simultaneously shooting the plurality of contents).

In an embodiment, the information may be included in at least one of metadata corresponding to each of the plurality of contents. The information, for example, may include at least one of data for identifying cameras corresponding to each of the plurality of contents (e.g., the front camera including the camera 150-1 and the rear camera of FIG. 2A), data for identifying the electronic device 101 obtaining each of the plurality of contents, or data indicating the time at which each of the plurality of contents was obtained (e.g., time stamp indicating the time at which video signal and/or audio signal was obtained). The information, for example, may include a preset parameter and/or a preset flag for indicating that each of the plurality of contents is synchronized with each other. An operation performed by the electronic device 101 according to an embodiment in response to identifying each of a plurality of synchronized contents will be described later with reference to FIGS. 3 to 5.

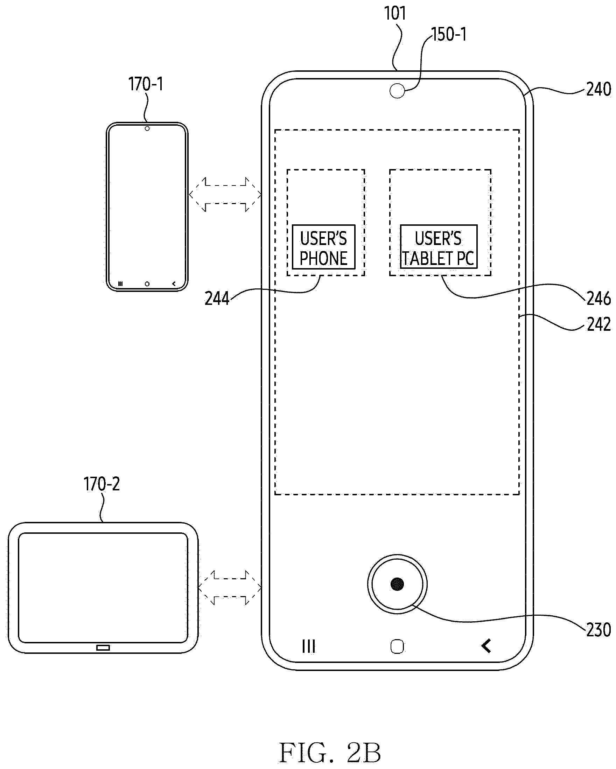

Referring to FIG. 2B, in a state in which the electronic device 101 is connected to one or more external electronic devices 170-1 and 170-2, a screen 240 is displayed for the electronic device 101 to simultaneously control a plurality of cameras included in each of the external electronic devices 170-1 and 170-2 and the electronic device 101. Between the electronic device 101 and the external electronic devices 170-1 and 170-2, a communication link based on Bluetooth, Wi-Fi, WiFi-Direct, and/or NFC may be established. For example, the electronic device 101 and the external electronic devices 170-1 and 170-2 may be paired based on Bluetooth. By using the established communication link, the electronic device 101 may identify one or more external electronic devices 170-1 and 170-2. In an embodiment, the electronic device 101 may identify one or more external electronic devices 170-1 and 170-2 logged - in by a user corresponding to the electronic device 101 by using a server connected to the electronic device 101. Based on a communication link and/or account information corresponding to a user using the electronic device 101, the electronic device 101 may identify one or more external electronic devices 170-1 and 170-2.

In response to identifying one or more external electronic devices 170-1 and 170-2, the electronic device 101 may display, on the display, a screen 240 for controlling a camera included in the electronic device 101 and one or more cameras included in the identified one or more external electronic devices 170-1 and 170-2. In a first area 242 in the screen 240, the electronic device 101 according to an embodiment may display a preview image based on at least a portion of an image received from a camera included in the electronic device 101. In an example in which the electronic device 101 identifies the external electronic devices 170-1 and 170-2, the electronic device 101 may display contents received from the external electronic devices 170-1 and 170-2 based on a second area 244 and a third area 246 distinguished from the first area 242. For example, in each of the second area 244 and the third area 246, the electronic device 101 may display videos of each of the content received from the external electronic devices 170-1 and 170-2.

In a state in which videos of each of the contents received from the external electronic devices 170-1 and 170-2 are displayed in the second area 244 and the third area 246 and a preview image obtained from a camera included in the electronic device 101 is simultaneously displayed in the first area 242, the electronic device 101 may display texts (e.g., "the user's tablet PC" and "the user's phone") indicating the external electronic devices 170-1 and 170-2 for transmitting the contents in the second area 244 and the third area 246 respectively. An example in which the second area 244 and the third area 246 overlap on the first area 242 is illustrated, but an embodiment is not limited thereto.

In response to receiving a shooting input associated with the visual object 230 displayed on the screen 240, the electronic device 101 according to an embodiment may obtain a plurality of contents by controlling cameras corresponding to each of areas (in an example of FIG. 2B, the first area 242, the second area 244, and the third area 246) displayed on the screen 240. For example, the electronic device 101 may obtain a video signal and an audio signal for generating a first content among the plurality of contents, by controlling the camera and microphone of the electronic device 101 corresponding to the first area 242. In the above example, the electronic device 101 may transmit a wireless signal for requesting generation of a second content and a third content among the plurality of contents with external electronic devices 170-1 and 170-2 corresponding to each of the second area 244 and the third area 246. In response to receiving the wireless signal, each of the external electronic devices 170-1 and 170-2 may obtain the video signal and the audio signal by controlling a camera and a microphone included in the external electronic device.

According to an embodiment, the acquisition of a video signal and an audio signal by each of the electronic device 101 and the external electronic devices 170-1 and 170-2 according to the shooting input based on the visual object 230 may be maintained from a timing when the shooting started to a timing when the shooting was stopped (e.g., to a timing when the electronic device 101 stopped the shooting by a user input for touching and/or clicking the visual object 230 again). In response to receiving the user input, the electronic device 101 may stop obtaining video signal and audio signal by using a camera and a microphone of the electronic device 101 corresponding to a preview image displayed in the first area 242. In response to receiving the user input, the electronic device 101 may generate a content associated with the preview image displayed in the first area 242 by merging a video signal and an audio signal obtained within a time section before receiving the user input after receiving the shooting input.

In response to receiving the user input, the electronic device 101 may transmit a wireless signal for requesting an interruption of obtaining a video signal and an audio signal to external electronic devices 170-1 and 170-2. Based on the wireless signal, the external electronic devices 170-1 and 170-2 may stop obtaining a video signal and an audio signal. In this case, the external electronic devices 170-1 and 170-2 may transmit the obtained content within a time section between the timings when different wireless signals requesting the obtainment and suspension of content is received from the electronic device 101 to the electronic device 101 displaying the screen 240.

According to an embodiment, in a state in which the electronic device 101 and the external electronic devices 170-1 and 170-2 obtain content based on a screen 240, the contents obtained by each of the electronic device 101 and the external electronic devices 170-1 and 170-2 may include information indicating that the contents are synchronized. The information may be included in metadata corresponding to the contents. The metadata may include the information based on an exchangeable image file format (EXIF). The information may include, for example, at least one of a preset flag indicating that the contents is generated based on a single shooting input performed within the screen 240 of the electronic device 101, or one or more time stamps indicating a time section in which a video signal and/or an audio signal included in the contents are received.

As described above, the electronic device 101 according to an embodiment may obtain synchronized contents by simultaneously controlling a plurality of cameras included in the electronic device 101. The electronic device 101 according to an embodiment may obtain synchronized contents by simultaneously controlling a camera included in the electronic device 101 and one or more cameras included in each of one or more external electronic devices (e.g., external electronic devices 170-1 and 170-2). The electronic device 101 according to an embodiment may support a function of collectively changing synchronized contents in a state of changing synchronized contents.

Hereinafter, identifying a group of synchronized contents among contents stored in a memory by the electronic device 101 according to an embodiment will be described with reference to FIGS. 3 to 4.

FIG. 3 is a diagram illustrating an example of a screen displayed by an electronic device according to an embodiment based on synchronized contents. The electronic device of FIG. 3 may correspond to an example of the electronic device 101 of FIGS. 1 and/or 2A to 2B. Screens 310, 320, and 330 of FIG. 3, for example, may be displayed by the electronic device in a state of executing a preset application for browsing one or more contents stored in the electronic device, such as a gallery application.

Referring to FIG. 3, the electronic device according to an embodiment may display a screen 310 including a list of one or more contents stored in a memory (e.g., the memory 120 of FIG. 1). In the list, the electronic device may display thumbnails corresponding to one or more contents stored in the memory. In the list, the thumbnails may be disposed based on a 2D grid. The order of the thumbnails disposed in the 2D grid may be determined based on at least one of time when contents corresponding to each of the thumbnails is obtained, type (e.g., photo and/or video), or position.

For example, in a memory, the electronic device according to an embodiment may identify synchronized contents obtained based on the operation described above in FIGS. 2A to 2B. For example, the electronic device may identify one or more other content synchronized with a specific content based on metadata of the specific content in the memory. For example, from first metadata, the electronic device may identify information indicating whether a first content corresponding to the first metadata is generated based on a preset mode (e.g., the visual object 212 in FIG. 2A) for obtaining synchronized contents. The information may include data for identifying one or more second contents synchronized with the first content. The information may indicate that contents obtained by different electronic devices (e.g., the electronic device 101 and the external electronic devices 170-1 and 170-2 of FIG. 2B) are synchronized with each other.

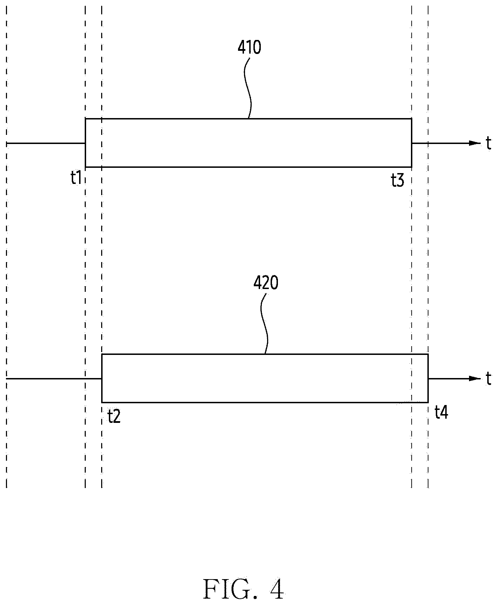

For example, from the metadata stored in the memory, the electronic device may identify one or more time stamps indicating a time at which the shooting corresponding to the contents was performed. The one or more time stamps may indicate a time at which a shooting input is received and/or a time at which a user input is received for stopping the shooting. By comparing the one or more time stamps, the electronic device may identify contents substantially simultaneously shot. Comparing the one or more time stamps by the electronic device according to an embodiment will be described later with reference to FIG. 4.

For example, the electronic device may determine whether the plurality of contents is synchronized by using audio signals included in each of the plurality of contents. For example, based on the similarity of the audio signals, the electronic device may determine that the contents including the audio signals are synchronized with each other. Comparing audio signals by the electronic device may include comparing a waveform and/or a frequency component indicated by the audio signals.

In response to identifying the synchronized contents, the electronic device according to an embodiment may overlap and display visual objects indicating that the contents are synchronized on thumbnails corresponding to each of the synchronized contents in the screen 310. Referring to FIG. 3, in case that contents corresponding to the thumbnails 312 and 314 are synchronized, the electronic device may overlap and display visual objects 311 and 313 indicating that the contents is synchronized on the thumbnails 312 and 314. The visual objects 311 and 313 may indicate that contents corresponding to each of the visual objects 311 and 313 includes video substantially simultaneously captured, based on an icon, an image, and/or text. The electronic device 101 according to an embodiment may include an icon, an image, and/or text indicating a camera corresponding to each of the thumbnails 312 and 313 in which the visual objects 311 and 313 overlap on each of the visual objects 311 and 313. In an example of FIG. 3, the visual object 311 may include an icon for indicating a camera (e.g., the front camera) associated with content corresponding to the thumbnail 312. In the above example, the visual object 313 may include an icon for indicating a camera (e.g., the rear camera) associated with content corresponding to the thumbnail 314.

In response to receiving a user input for selecting any one of the thumbnails displayed on the screen 310, the electronic device according to an embodiment may display a screen for reproducing a content corresponding to a thumbnail selected by the user input. For example, in response to identifying a user input touching and/or clicking on the thumbnail 312, the electronic device may display a screen 320 for reproducing content corresponding to the thumbnail 312. For example, in response to identifying an external object (e.g., a fingertip of a user) in contact with the thumbnail 314, the electronic device may display a screen 330 for reproducing content corresponding to the thumbnail 312.

Referring to FIG. 3, the electronic device according to an embodiment may reproduce contents corresponding to each of the screens 320 and 330 within portions 322 and 332 of each of screens 320 and 330. The electronic device according to an embodiment may display a visual object (e.g., visual objects 324 and 334) indicating that the content reproduced based on the screen is any one of synchronized contents within a screen (e.g., screens 320 and 330) for reproducing content. Referring to FIG. 3, the electronic device may display visual objects 324 and 334 indicating that contents reproduced in parts 322 and 332 of the screens 320 and 330 is synchronized contents on each of the screens 320 and 330.

In the visual objects 324 and 334, the electronic device according to an embodiment may display information associated with synchronized contents. The information may include, for example, information associated with a camera corresponding to content. In an example of FIG. 3, the electronic device may display a visual object 324 including text for identifying a camera (e.g., a front camera) associated with the content in the screen 320 for displaying content corresponding to the thumbnail 312. For another example, the electronic device may display a visual object 334 including text for identifying a camera (e.g., a rear camera) associated with the content within the screen 330 for displaying content corresponding to the thumbnail 314.

The electronic device according to an embodiment may display a visual object for displaying another screen for changing and/or editing content within a screen (e.g., screens 320 and 330) for reproducing the content. Referring to FIG. 3, the electronic device may display visual objects 326 and 336 for switching to another screen for changing contents corresponding to the screens 320 and 330 on each of the screens 320 and 330. The visual objects 326 and 336 may include an icon(e.g., an icon in the form of a pencil), an image, and/or text that intuitively indicate a function for changing contents.

The electronic device according to an embodiment may display a screen 340 for identifying whether to collectively change synchronized contents in response to receiving a user input for selecting visual objects 326 and 336 included in screens 320 and 330 corresponding to each of the synchronized contents. The electronic device may display the screen 340 in a first state of displaying a screen (e.g., the screens 320 and 330 of FIG. 3) for reproducing any one of the synchronized contents. In a second state (e.g., a state in which there is no other content synchronized with the content reproduced in the screen) different from the first state, the electronic device may limit or/or stop displaying the screen 340. Referring to FIG. 3, the screen 340 may correspond to an example of a pop-up window displayed on a portion of the display. For example, in response to receiving a user input touching and/or clicking on the visual object 326, the electronic device may display the screen 340, overlapping on the screen 320.

Referring to FIG. 3, in a screen 340, The electronic device may display a visual object 342 corresponding to a first screen for collectively changing synchronized contents and a visual object 344 corresponding to a second screen for changing a specific content (e.g., a content selected by the user in the screen 310) among the synchronized contents. For example, in a state that the electronic device displays the screen 340 based on a user input for selecting the visual object 326 included in the screen 320, the visual object 344 may cause displaying the second screen for changing a content (e.g., a content corresponding to the thumbnail 312) corresponding to the screen 320. In the above example, the visual object 342 may cause displaying a first screen for changing all of the content corresponding to the screen 320 and another content (e.g., a content corresponding to the thumbnail 314) synchronized with the content. The first screen, for example, may correspond to a screen for changing and/or merging synchronized contents based on a PIP layout.

In response to receiving a user input selecting the visual object 342 of the screen 340, the electronic device according to an embodiment may display a screen for collectively changing synchronized contents. In response to receiving the user input, the electronic device may identify whether the contents are synchronized with each other. In an embodiment, an operation of the electronic device identifying whether the contents are synchronized may include an operation in which the electronic device identifies whether at least one of the contents is distorted in a time domain. For example, when reproduction speed of at least one of synchronized contents is changed, and/or at least one of synchronized contents is segmented within the time domain, the electronic device may display the second screen different from the first screen for collectively changing synchronized content.

As described above, the electronic device according to an embodiment may display the screen 340 for selecting whether to collectively change synchronized contents or change any one of the synchronized contents among a plurality of contents stored in the memory. Changing synchronized contents collectively may include trimming all of the synchronized contents.

Hereinafter, referring to FIG. 4, an operation in which an electronic device according to an embodiment compare one or more time stamps indicated by metadata of a plurality of contents to identify synchronized contents will be described in detail.

FIG. 4 is an exemplary diagram for describing an operation in which an electronic device according to an embodiment compares time sections in which each of videos of contents is shot. The electronic device of FIG. 4 may correspond to an example of the electronic device 101 of FIGS. 1 and 2A to 2B and/or the electronic device of FIG. 3. The electronic device according to an embodiment, for example, may perform an operation described later based on FIG. 4 in response to receiving a user input for selecting the visual object 342 of FIG. 3. The electronic device according to an embodiment, for example, may perform an operation described later based on FIG. 4 to identify synchronized contents among contents included in the list of the screen 310 of FIG. 3.

The electronic device according to an embodiment may identify a time section in which a content is obtained from metadata corresponding to the content. Referring to FIG. 4, time sections 410 and 420 identified from each of a first content and a second content by the electronic device are illustrated along a coincident time axis. For example, based on one or more time stamps (e.g., time stamps indicating time corresponding to t1 and/or t3 of FIG. 4) included in first metadata corresponding to the first content, the electronic device may identify the time section 410 in which video and audio signals included in the first content are obtained. For example, the electronic device may identify the time section 420 in which the second content is obtained based on data included in second metadata corresponding to the second content.

The electronic device according to an embodiment may identify whether the first content and the second content are synchronized by comparing time sections 410 and 420 corresponding to each of the first content and the second content to identify whether the first content and the second content are synchronized. The electronic device may compare a difference between the time sections 410 and 420 with a preset threshold. For example, in case that a difference (e.g., t2-t1) between start timings of each of the time sections 410 and 420 is less than a preset threshold (e.g., 0.5 seconds), and a difference (e.g., (t3-t1) - (t4-t2)) between durations of the time sections 410 and 420 is less than the preset threshold (e.g., 0.5 seconds), the electronic device may determine that the first content and the second content corresponding to each of the time sections 410 and 420 are synchronized. The preset threshold may be associated with a difference between timings at which a plurality of cameras perform shooting based on a shooting input.

In case that it is determined that the first content and the second content are synchronized based on the time sections 410 and 420, the electronic device may identify a history in which reproduction speed of each of the first content and the second content is changed, or any one of the first content and the second content is segmented (e.g., trimmed) within the time domain. For example, the electronic device may provide a function for individually changing any one of the synchronized contents, such as the visual object 344 of FIG. 3. In case that any one of the synchronized contents is changed based on the function, the electronic device may store information indicating a function (e.g., trimming and/or reproduction speed change) used to change the content in metadata corresponding to the changed content. Based on the information, the electronic device according to an embodiment may identify whether at least one of the first content and the second content is distorted in the time domain. When at least one of the first content and the second content is distorted in the time domain, the electronic device may display another screen that is different from a screen changes collectively the first content and the second content.

As described above, the electronic device according to an embodiment may identify whether the contents are synchronized based on the time sections 410 and 420 in which contents (e.g., the first content and the second content) were obtained and a postprocess function (e.g., trimming and/or reproduction speed change) performed on each of the contents. In case that a difference between time sections corresponding to the contents is less than a preset difference, and the post-processing function causing distortion within the time domain is not performed on each of the contents, the electronic device may determine that the contents are synchronized. In case that the contents are synchronized, the electronic device may provide a first screen for collectively changing the contents. In case that the difference between time sections corresponding to the contents exceeds the preset difference, or in case that the post-processing function causing the distortion in the time domain is performed on at least one of the contents, the electronic device may determine that the contents are not synchronized. In case that the contents are not synchronized, the electronic device may provide a second screen distinguished from the first screen and for individually changing the contents.

Hereinafter, in a state that it is determined that the content is synchronized, the first screen displayed by the electronic device and executing a function in which the electronic device collectively changes the contents through the first screen will be described in detail with reference to FIGS. 5 to 9.

FIG. 5 is a diagram illustrating an example of a screen 510 displayed by an electronic device according to an embodiment to change synchronized contents. The electronic device of FIG. 5 may correspond to an example of the electronic device 101 of FIGS. 1 and 2A to 2B and/or the electronic device of FIGS. 3 to 4.

The electronic device according to an embodiment, for example, may display a screen 510 on a display (e.g., the display 130 of FIG. 1) in response to receiving a user input associated with the visual object 342 of FIG. 3. Displaying the screen 510 by the electronic device, for example, may be performed in a state of identifying synchronized contents based on the operation described above in FIG. 4. The synchronized contents, for example, may include each of videos simultaneously obtained by the electronic device using a front camera and a rear camera. In the above example, the synchronized contents may include an audio signal while the electronic device obtains the videos.

The electronic device according to an embodiment may provide a function for collectively changing synchronized contents by using the screen 510. The electronic device according to an embodiment may provide a function of merging and storing the contents collectively changed using the screen 510. For example, by using the screen 510, the electronic device according to an embodiment may provide a preview of a single content to be generated by merging the contents.

The electronic device according to an embodiment may display synchronized contents on each of areas 520 and 530 within the screen 510. The areas 520 and 530, for example, may at least partially overlap based on a PIP layout. A positional relationship between areas 520 and 530, for example, may be determined based on a PIP layout (e.g., a PIP layout selected by the visual object 222 of FIG. 2A) inputted from the user at a timing of obtaining contents corresponding to each of the areas 520 and 530. The positional relationship between areas 520 and 530, for example, may be determined based on content selected by the user before displaying the screen 510. In an example of FIG. 3, in case that the user enters the screen 510 based on a visual object 326 in a screen 320 for reproducing a first content corresponding to a thumbnail 312 among the synchronized contents, the electronic device may display the first content corresponding to the thumbnail 312 in a relatively large area 520 among the areas 520 and 530, and display a second content (e.g., content corresponding to the thumbnail 314) synchronized with the first content in another area 530. In an embodiment, a portion of the screen 510 corresponding to the areas 520 and 530 may correspond to a preview of a single content to be generated by the electronic device by merging contents corresponding to each of the areas 520 and 530.

The electronic device according to an embodiment may display one or more visual objects for controlling reproduction of synchronized contents by using a portion 540 in the screen 510. Referring to FIG. 5, the electronic device may display an icon for reproducing content being displayed through the areas 520 and 530 within the portion 540. The electronic device may display text (e.g., 3:49 in the portion 540 of FIG. 5) indicating the total reproduction time of the contents in the portion 540. The electronic device may display text (e.g., 0:15 in the portion 540 of FIG. 5) indicating a reproduction timing corresponding to a frame of contents being displayed on the screen 510 in the portion 540. The electronic device may display a seek bar for supporting search of contents displayed on the screen 510 within the time domain in the portion 540.

The electronic device according to an embodiment may display a list 550 of one or more functions applicable to synchronized contents within the screen 510. Referring to FIG. 5, the electronic device may display functions applicable to the contents by using a plurality of visual objects 551, 552, 553, 554, 555, and 556 included in the list 550. The list 550 may be scrolled in a portion of the screen 510. For example, among the six visual objects 551, 552, 553, 554, 555, and 556 included in the list 550, the electronic device may display four visual objects in a portion of the screen 510. In response to receiving a user input (e.g., a drag and/or swipe gesture performed in the portion), the electronic device may stop displaying at least one of the four visual objects and display at least one of remaining two visual objects in the portion.

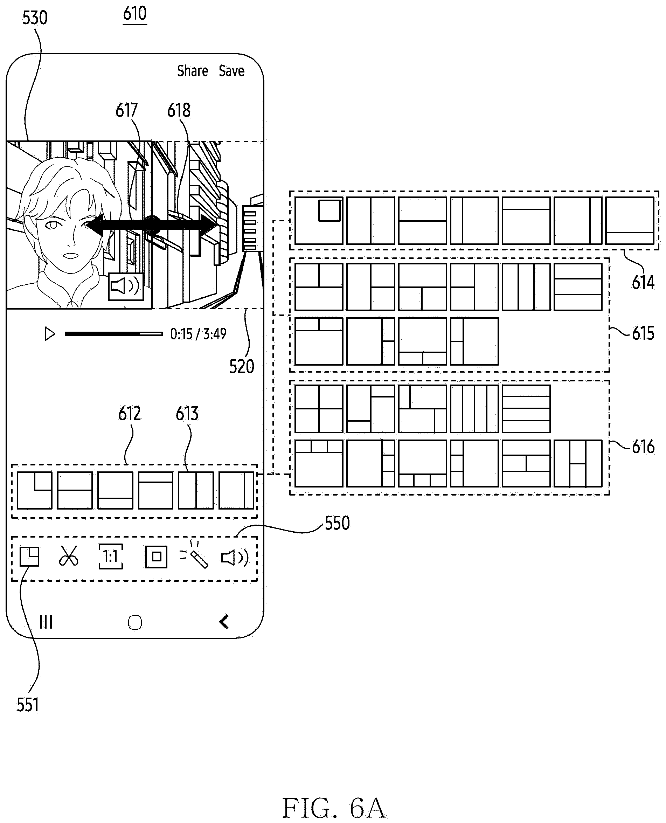

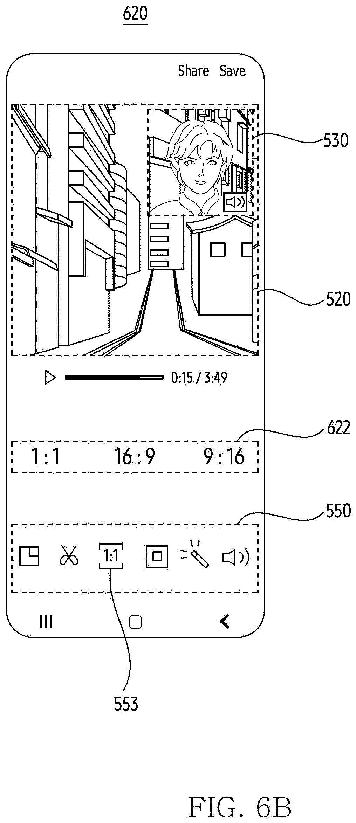

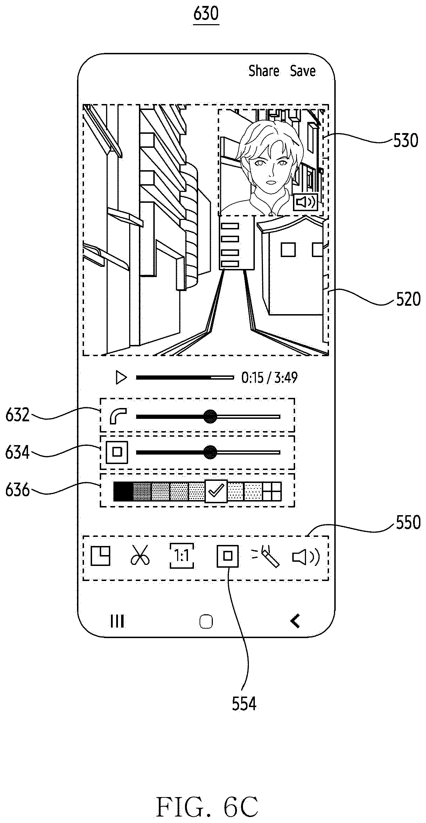

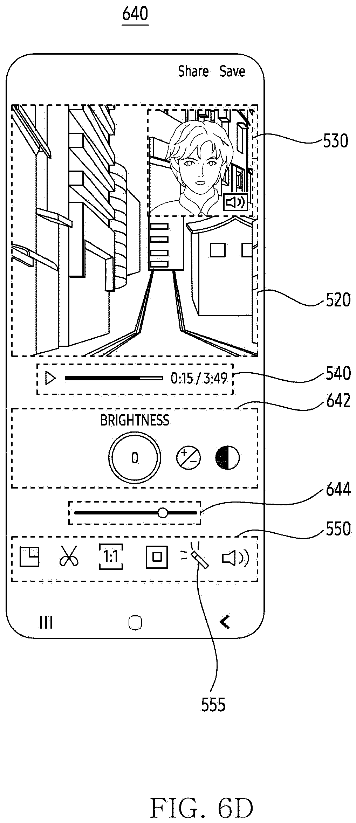

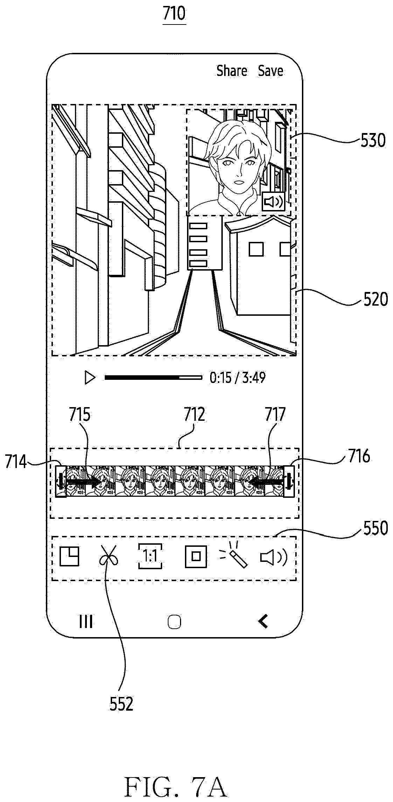

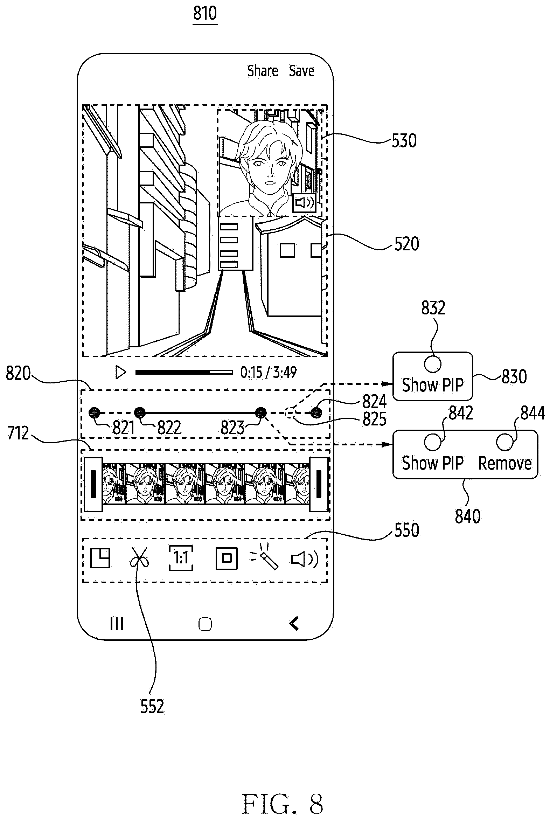

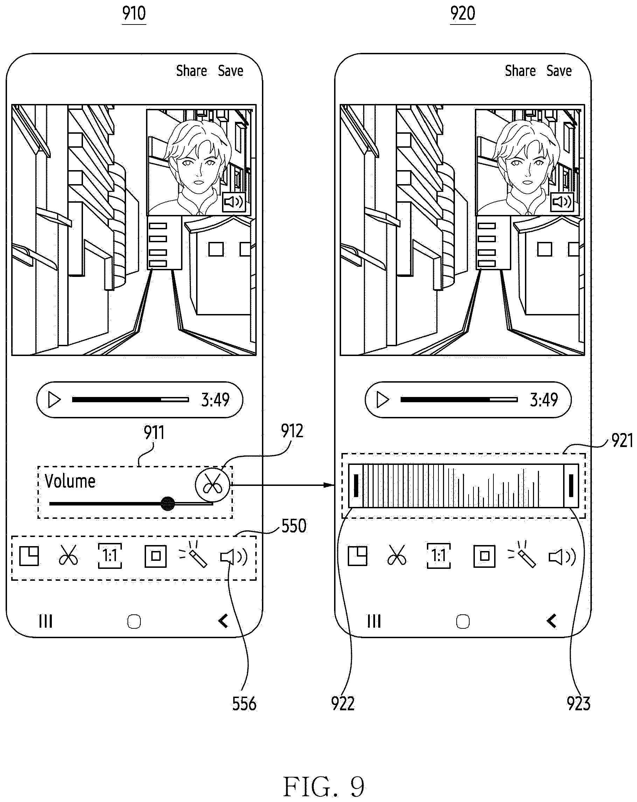

In an example of FIG. 5, the visual objects 551, 552, 553, 554, 555, and 556 displayed by the electronic device through the list 550 may be an icon intuitively representing a corresponding function. For example, the visual object 551 may correspond to a function of adjusting a positional relationship between the areas 520 and 530. An operation performed by the electronic device based on the visual object 551 will be described later with reference to FIG. 6A. For example, the visual object 552 may correspond to a function of segmenting (e.g., trimming) synchronized contents. An operation performed by the electronic device based on the visual object 552 will be described later with reference to FIGS. 7A to 7B and/or 8. For example, the visual object 553 may correspond to a function of changing an aspect ratio of at least one of the areas 520 and 530. An operation performed by the electronic device based on the visual object 553 will be described later with reference to FIG. 6B. For example, the visual object 554 may correspond to a function of adjusting the shape and/or color of at least one border line of the areas 520 and 530. An operation performed by the electronic device based on the visual object 554 will be described later with reference to FIG. 6C. For example, the visual object 555 may correspond to a function of adjusting the color and/or brightness of all videos of synchronized contents. An operation performed by the electronic device based on the visual object 555 will be described later with reference to FIG. 6D. For example, the visual object 556 may correspond to a function of collectively changing audio signals of synchronized contents. An operation performed by the electronic device based on the visual object 556 will be described later with reference to FIG. 9.

The electronic device according to an embodiment may display a visual object 570 for collectively adjusting audio signals of the synchronized contents within the screen 510 displayed based on the synchronized contents. The electronic device may display the visual object 570 on an edge and/or a border line of any one of the areas 520 and 530. In response to receiving a user input for selecting the visual object 570, the electronic device according to an embodiment may collectively adjust (e.g., mute) volumes of audio signals of the synchronized contents.

The electronic device according to an embodiment, within the screen 510, may display visual objects 580 and 590 associated with content in which the synchronized content displayed on the screen 510 is merged. For example, the visual object 580 may correspond to a function for storing content generated by merging the synchronized contents in the memory of the electronic device. For example, the visual object 590 may correspond to a function for transmitting content generated by merging the synchronized contents to one or more external electronic devices and/or one or more users. Content generated by a user input associated with the visual objects 580 and 590 may correspond to a result of changing the synchronized contents based on the screen 510.

As described above, the electronic device according to an embodiment may allow a user to edit synchronized contents more easily by using the screen 510 that provides a function for collectively changing the synchronized contents. Hereinafter, an operation in which the electronic device changes the synchronized contents based on a user input performed within the screen 510 will be described in detail.

FIGS. 6A to 6D are diagrams illustrating different examples of screens 610, 620, 630 and 640 displayed by an electronic device according to an embodiment based on a user input performed on the screen of FIG. 5. The electronic devices of FIGS. 6A to 6d may correspond to an example of the electronic device 101 of FIGS. 1 and 2A to 2B and/or the electronic device of FIGS. 3 to 5. For example, the electronic device may selectively display any one of the screens 610, 620, 630, and 640 based on a user input received in a state of displaying the screen 510 of FIG. 5. The screens 610, 620, 630, and 640 of FIGS. 6A to 6D may be screens on which the electronic device changes and displays at least a portion of the screen 510. The user input, for example, may include a gesture of touching and/or clicking any one of visual objects included in the list 550 of FIG. 5.

FIG. 6A is a diagram for describing a screen 610 in which the electronic device displays on a display in response to receiving a user input for selecting a visual object 551 in the list 550. The visual object 551 may correspond to a function of adjusting a positional relationship of the areas 510 and 520 displayed on the screen 610. For example, by using the screen 610 displayed based on the visual object 551, the electronic device may receive a user input for adjusting the PIP layout.

Referring to FIG. 6A, the electronic device may display a list including one or more icons for adjusting the positional relationship of the areas 510 and 520 in a portion 612 of the screen 610. In response to receiving a user input for scrolling the list displayed in the portion 612, the electronic device may change one or more icons in the portion 612.

Each of the icons included in the list displayed in the portion 612 may correspond to different positional relationships of at least two synchronized contents being displayed on the screen 610. Referring to FIG. 6A, different sets 614, 615, and 616 of the icons are illustrated. The electronic device according to an embodiment may display one or more icons included in at least one of the sets 614, 615, and 616 in the portion 612 based on the number of contents displayed on the screen 610. For example, the set 614 may include a plurality of icons for adjusting a positional relationship of two contents. For example, in case that the number of synchronized contents corresponds to two, the electronic device may display icons included in the set 614 in the portion 612. For example, the set 615 may include a plurality of icons for adjusting a positional relationship of three contents. For example, in case that the number of the synchronized contents corresponds to three (e.g., three contents are simultaneously obtained by using the electronic device 101 of FIG. 2B and the external electronic devices 170-1 and 170-2), the electronic device may display a plurality of icons included in the set 615 in the portion 612. For example, the set 616 may include a plurality of icons for adjusting a positional relationship of four contents.

The electronic device according to an embodiment may change at least one of sizes or positions of the areas 520 and 530 of the contents displayed on the screen 610 in response to receiving a user input for selecting any one of the icons in the list displayed through the portion 612. For example, as shown in the screen 510 of FIG. 5, it is assumed that the electronic device receives a user input for selecting the icon 613 of FIG. 6 in a state in which the area 530 is overlapped and displayed on at least a part of the area 520. In this case, similar to FIG. 6A, based on the PIP layout displayed by the icon 613, the electronic device may change positions and/or sizes of the areas 520 and 530 so that the areas 520 and 530 are connected along a direction within the screen 610. A positional relationship of the areas 520 and 530 changed by the visual object 613 may correspond to a positional relationship within another content obtained by the electronic device by merging contents corresponding to each of the areas 520 and 530.

In an embodiment, the electronic device may change the positional relationship of the areas 520 and 530 based on a user input performed in the areas 520 and 530. For example, in response to receiving a user input for selecting any one of the areas 520 and 530, the electronic device may display a visual object for changing a position and/or a size of an area selected by the user input of the areas 520 and 530. For example, the visual object may include a handle (or dot) displayed along a border line of an area selected by a user input. For example, the electronic device may swap the positions of the areas 520 and 530 in response to receiving a user input for dragging any one of the areas 520 and 530 to another area. The user input may include a long touch gesture for selecting any one of the areas 520 and 530 for more than a preset period.

For example, the electronic device may change size or position of the areas 520 and 530 based on a user input performed at a border line between the areas 520 and 530. Referring to FIG. 6A, in response to receiving a drag gesture that begins on the border line between areas 520 and 530 and is performed along any one of trajectories 617 and 618, the electronic device may adjust a position of the border line between areas 520 and 530 based on the trajectory of the drag gesture. For example, in case of receiving a drag gesture performed along the trajectory 617, the electronic device may reduce a size of the area 530 based on an end point of the drag gesture performed along the trajectory 617. The electronic device may increase a size of the area 520 while reducing the size of the area 530.

FIG. 6B is a diagram for describing a screen 620 in which the electronic device according to an embodiment displays on the display in response to receiving a user input for selecting a visual object 553 in the list 550. The visual object 553 may correspond to a function of changing an aspect ratio of at least one of the areas 520 and 530. Referring to FIG. 6B, the electronic device may display a list of different aspect ratios in a portion 622 of the screen 620. In the list, the electronic device may display aspect ratios selectable by the user based on text. In an example of FIG. 6B, the electronic device may display texts corresponding to each of 1:1 aspect ratio, 16:9 aspect ratio and/or 9:16 aspect ratio in the portion 622.

In response to receiving a user input for selecting any one of the aspect ratios displayed on the portion 622, the electronic device may change the aspect ratio of at least one of the areas 520 and 530 to an aspect ratio corresponding to the received user input. For example, in case that the user selects the text corresponding to 1:1 aspect ratio in the portion 622 after selecting the area 520, the electronic device may change the aspect ratio of the area 520 to the 1:1 aspect ratio. The aspect ratio of the changed areas 520 and 530 based on the screen 620 may correspond to the aspect ratio of the contents within another content obtained by the electronic device merging contents corresponding to each of the areas 520 and 530.

FIG. 6C is a diagram for describing a screen 630 in which the electronic device displays on the display in response to receiving a user input for selecting the visual object 554 in the list 550. The visual object 554 may correspond to a function of adjusting a shape and/or a color of a border line of at least one of the areas 520 and 530.

Referring to FIG. 6C, the electronic device may display a visual object (e.g., a seek bar) for adjusting roundness of a border line on a portion 632 of the screen 630. The electronic device may display a visual object (e.g., a seek bar) for adjusting thickness of the border line on a portion 634 of the screen 630. The electronic device may display a color list for adjusting a color of the border line on a portion 636 of the screen 630. For example, in a state in which the user selects the area 530, in response to receiving a user input based on portions 632, 634, and 636, the electronic device may adjust at least one of the roundness, thickness, or color of the border line of the area 530. The border line of each of the areas 520 and 530 adjusted based on the screen 630 may correspond to boundary lines of contents within another content that the electronic device obtains by merging the contents corresponding to each of the areas 520 and 530.

FIG. 6D is a diagram for describing a screen 640 in which the electronic device according to an embodiment displays on the display in response to receiving a user input for selecting a visual object 555 in the list 550. The visual object 555 may correspond to a function of collectively adjusting at least one of color or brightness of videos of the synchronized contents.

Referring to FIG. 6D, in a portion 642 of the screen 640, the electronic device may display a list of functions to be collectively applied to videos of synchronized contents (e.g., contents corresponding to each of the areas 520 and 530). For example, the functions may include a function of changing brightness of the videos, a function of changing tone of the videos, and/or a function of changing contrast range of the videos. For example, in case that a user selects the function of changing brightness within the portion 642, the electronic device may display a visual object for collectively changing brightness of the synchronized contents within a portion 644 distinguished from the portion 642. Based on a numerical value controlled by the visual object, the electronic device may collectively adjust brightness of the contents displayed in each of the areas 520 and 530.

As described above, the electronic device according to an embodiment may provide a function of at least partially or collectively changing synchronized contents. The electronic device may merge and store the changed contents based on the screens 610, 620, 630, and 640 in response to receiving a preset user input (e.g., a user input for selecting the visual object 580 of FIG. 5).

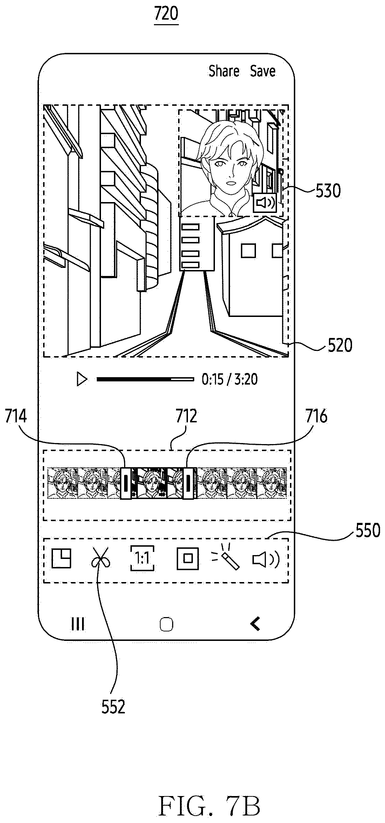

FIGS. 7A and 7B are exemplary diagrams for describing in which an electronic device according to an embodiment segments synchronized contents based on the screen of FIG. 5. The electronic devices of FIGS. 7A to 7B may correspond to the electronic device 101 of FIGS. 1 and 2A to 2B and/or the electronic devices of FIGS. 3 to 5, and 6A to 6D. For example, the electronic device may display a screen 710 of FIG. 7A based on a user input received in a state of displaying the screen 510 of FIG. 5. Screens 710 and 720 of FIGS. 7A to 7B may be screens on which an electronic device changes and displays at least a portion of the screen 510. The user input, for example, may include a gesture of touching and/or clicking on a visual object 552 included in a list 550.

Referring to FIG. 7A, the electronic device according to an embodiment may display a timeline based on at least one of videos of contents displayed through the screen 710 and synchronized with each other in a portion 712 of the screen 710. The timeline may include a plurality of thumbnails corresponding to each of at least one different timings of the videos. The timeline may correspond to the entire time section in which the videos are reproduced. For example, each of thumbnails continuously displayed in the timeline may correspond to different timings of video of content corresponding to a relatively large area 520 among areas 520 and 530. For another example, each of the thumbnails continuously displayed in the timeline may correspond to different timings of merged video based on a positional relationship of the areas 520 and 530 displayed in the screen 710.

The electronic device according to an embodiment may collectively change synchronized contents by using a single timeline displayed within the portion 712 within the screen 710 displayed while changing synchronized contents. Referring to FIG. 7, the electronic device may overlap and display visual objects 714 and 716 on a timeline included within the portion 712. Each of the visual objects 714 and 716 may indicate a timing at which synchronized contents are collectively segmented based on a position of the visual object within the timeline. In response to receiving a user input for dragging at least one of the visual objects 714 and 716, the electronic device may segment and/or trim the synchronized contents based on a position in a timeline of the visual object dragged by the user input.

For example, after receiving a first user input for dragging the visual object 714 along a trajectory 715, and a second user input for dragging the visual object 716 along a trajectory 717, the electronic device may display a screen 720 of FIG. 7B. The position of the visual objects 714 and 716 in the screen 720 within the timeline may correspond to end points of each of a first user input and a second user input. In response to changing the position of the visual objects 714 and 716 according to the first user input and the second user input, the electronic device may collectively segment the synchronized contents based on the position of the visual objects 714 and 716 within the timeline. For example, within the timeline corresponding to the entire time section in which videos of synchronized contents are reproduced, the electronic device may extract a video included in a time section corresponding to a portion between the visual objects 714 and 716 and audio signals synchronized with the videos. In the above example, after performing segmenting of contents based on the screen 720 of FIG. 7B, the electronic device may merge contents corresponding to each of the areas 520 and 530 along the time section corresponding to the portion between the visual objects 714 and 716 within the timeline.

As described above, the electronic device according to an embodiment may display a screen 710 for collectively segmenting the synchronized contents in a state of changing the synchronized contents. Within the screen 710, the electronic device may display a single timeline corresponding to all of the synchronized contents.

FIG. 8 is an exemplary diagram illustrating an operation in which an electronic device adjusts displaying any one of videos of synchronized contents based on the screen 510 of FIG. 5. The electronic device of FIG. 8 may correspond to an example of the electronic device 101 of FIGS. 1 and 2A to 2B, and/or the electronic device of FIGS. 3 to 5, 6A to 6D, and 7. For example, the electronic device may display a screen 810 of FIG. 8 based on a user input received in a state of displaying the screen 510 of FIG. 5. The screen 810 of FIG. 8 may be a screen on which the electronic device changes and displays at least a portion of the screen 510. The user input for example, may include a gesture of touching and/or clicking on a visual object 552 included within a list 550.

Referring to FIG. 8, the electronic device according to an embodiment may display a first timeline for collectively segmenting synchronized contents, within the portion 712 of the screen 810. The first timeline displayed within the portion 712 may correspond to the timeline of FIGS. 7A to 7B. The electronic device according to an embodiment may display a second timeline for adjusting a time section in which at least one of the videos of synchronized contents will be displayed within a portion 820 adjacent to the first timeline. For example, the second timeline may be displayed within the screen 810 to adjust a time section for displaying a video of a content corresponding to the relatively small area 530 among the areas 520 and 530.

The second timeline displayed by the electronic device according to an embodiment within the portion 820 may be synchronized with the first timeline displayed in the portion 712. For example, a length of the second timeline and a length of the first timeline may match each other. Referring to FIG. 8, each of a visual object 821 corresponding to a start point of the second timeline and a visual object 824 corresponding to an end point may correspond to a start timing and an end timing of the first timeline. A length between the visual objects 821 and 824 (e.g., the length of the second timeline) may correspond to the length of the first timeline. In a state in which the electronic device displays the first timeline and the second timeline in parallel, a timing corresponding to a specific position of the second timeline may match a timing corresponding to another position of the first timeline adjacent to the specific position.

Referring to FIG. 8, the electronic device may display the second timeline with the form of a straight line within the portion 820. The electronic device may identify a user input for adjusting a time section for displaying a video of the content corresponding to the area 530 among the areas 520 and 530 by using the second timeline.

Referring to FIG. 8, an example of the second timeline adjusted by the user input is illustrated. Visual objects 822 and 823 on the second timeline, which are displayed by the electronic device based on the user input, may correspond to a start point and an end point of the time section in which the video of the content corresponding to the area 530 is displayed. For example, in case that the electronic device generates another content by merging synchronized contents, within the other content, at least one (e.g., the content corresponding to the area 530) of the synchronized contents may be displayed during a time section corresponding to the visual objects 822 and 823. That at least one of the synchronized contents is displayed during the time section may mean that the synchronized contents are simultaneously reproduced within the time section based on the PIP layout. In an embodiment, in case that different time sections displaying all of the synchronized contents are present, by a user input performed on the second timeline, the PIP layout in each of the different time sections may be independently changed.

The electronic device according to an embodiment may visualize a time section displaying a video of the content corresponding to the area 530 based on the second timeline. In an example of FIG. 8, the electronic device may display the time section based on a straight line (e.g., a straight line connecting the visual objects 822 and 823) within the second timeline. The electronic device according to an embodiment may display another time section in which displaying the video of the content corresponding to the area 530 is stopped based on a dashed line (e.g., a dashed line connecting the visual objects 821 and 822 and/or a dashed line connecting the visual objects 823 and 824) within the second timeline. The embodiment is not limited thereto, and the electronic device may display a time section displaying a video of content corresponding to a relatively small area (e.g., the area 530) based on at least one of thickness or a color of a straight line.

Referring to FIG. 8, the electronic device according to an embodiment may identify a user input for changing a display of at least one of synchronized contents, based on the second timeline within the portion 820 of the screen 810. For example, in response to identifying a user input for selecting a point 825 on the dashed line within the second timeline, the electronic device may overlap and display a screen 830 corresponding to a pop-up window on the screen 810. Within the screen 830, the electronic device may display a visual object 832 for displaying content corresponding to the area 530 at the point 825. In response to receiving a user input for selecting the visual object 832, the electronic device may display a content corresponding to the area 530 based on the PIP layout of the screen 810 at a timing corresponding to the point 825 of the second timeline. For example, in response to identifying a user input for dragging any one of the visual objects 822 and 823 overlapped and displayed on the second timeline, the electronic device may adjust a time section displaying content corresponding to the area 530.

For example, in response to identifying a user input for selecting the visual object 823 overlapped and displayed on the second timeline, the electronic device may overlap and display the screen 830 corresponding to a pop-up window on the screen 810. Within the screen 830, the electronic device may display a visual object 842 for adding another visual object distinguished from the visual object 823 to the second timeline, and a visual object 844 for removing the visual object 823 selected by a user input. In response to identifying the user input for selecting the visual object 842, the electronic device may add one or more visual objects distinguished from a time section between the visual objects 822 and 823 and for selecting another time section for displaying content corresponding to the area 530, on a second timeline. In response to identifying the user input selecting the visual object 844, the electronic device may remove the visual object 823 on the second timeline.

As described above, the electronic device according to an embodiment may further display a second timeline for partially adjusting a display of any one of the synchronized contents within a time domain. Based on the second timeline, the electronic device may change a PIP layout within the time domain.

FIG. 9 is an exemplary diagram illustrating an operation in which an electronic device according to an embodiment changes audio signals included in synchronized contents based on the screen of FIG. 5. The electronic device of FIG. 9 may correspond to an example of the electronic device 101 of FIGS. 1 and 2A to 2B and/or the electronic device of FIGS. 3 to 5, 6A to 6D, and 7 to 8. For example, the electronic device may display at least one of screens 910 and 920 of FIG. 9 based on a user input received in a state of displaying the screen 510 of FIG. 5. The screens 910 and 920 of FIG. 9 may be a screen in which the electronic device changes and displays at least a portion of the screen 510.

Referring to FIG. 9, the screen 910 on which the electronic device according to an embodiment displays in response to receiving a user input for selecting a visual object 556 in a list 550 is illustrated. The visual object 556 may correspond to a function of collectively adjusting audio signals of synchronized contents. The electronic device according to an embodiment may display a visual object for adjusting the volume of all audio signals of the synchronized contents within a portion 911 of the screen 910. Referring to FIG. 9, a visual object displayed within a portion 911 may have a form of a seek bar for adjusting a numerical value indicating a volume based on a drag gesture. In response to receiving a user input associated with the visual object displayed within the portion 911, the electronic device may change the volume of all audio signals of the synchronized contents. For example, the volume of the audio signal included in another content obtained by merging synchronized contents by the electronic device may have a volume changed by the user input.

Referring to FIG. 9, the electronic device according to an embodiment may display a visual object 912 for displaying the screen 920 for collectively segmenting audio signals of synchronized contents within the screen 910. In response to identifying a user input for selecting the visual object 912, the electronic device may display the screen 920.

Referring to FIG. 9, the electronic device may display a timeline for searching the audio signals in a portion 921 of the screen 920. The electronic device may display at least one waveform among the audio signals within the timeline. The electronic device may overlap and display the visual objects 922 and 923 on a timeline included within the portion 921. Each of the visual objects 922 and 923 may indicate a timing at which the audio signals are collectively segmented based on a position of a visual object within the timeline. For example, similar to the visual objects 714 and 716 of FIGS. 7A and 7B, in response to receiving a user input for dragging one of the visual objects 922 and 923, the electronic device may segment and/or trim the audio signals based on a position within the timeline of the visual object dragged by the user input.

As described above, the electronic device according to an embodiment may provide a function of collectively segmenting and/or trimming videos and/or audio signals of synchronized contents in a state of displaying a screen (e.g., the screen 510 of FIG. 5) that collectively changes synchronized contents. Based on the function, a user of the electronic device may more easily edit synchronized contents.

Hereinafter, in a state that the contents are not synchronized, a screen that an electronic device displays to change contents will be described in detail with reference to FIG. 10.

FIG. 10 is a diagram illustrating an example of screens 1010, 1020, and 1030 that an electronic device according to an embodiment displays to change independent contents. The electronic device of FIG. 10 may correspond to an example of the electronic device 101 of FIGS. 1 and 2A to 2B and/or the electronic device of FIGS. 3 to 5, 6A to 6D, and 7 to 9.

For example, the electronic device according to an embodiment may display the screen 1010 on a display (e.g., the display 130 of FIG. 1) in response to receiving a user input associated with the visual object 344 of FIG. 3. For example, such as an operation described above in FIG. 4, that electronic device displays the screen 1010 may be performed in a state in which a post-processing function of a preset type(e.g., a post-processing function that causes distortion within a time domain) is applied to at least one of the contents substantially simultaneously shot. For example, that the electronic device displays the screen 1010 may be performed in a state in which a request to change out-of-synchronized contents is received. The electronic device according to an embodiment may provide a function for individually changing contents by using the screen 1010. The electronic device according to an embodiment may provide a function of storing changed contents by merging them based on the screen 1010. For example, the screen 1010 may include a preview of a single content that will be generated by merging contents by the electronic device.

The electronic device according to an embodiment may display contents on each of areas 1013 and 1015 within the screen 1010. The areas 1013 and 1015 may partially overlap at least or may be adjacently disposed within the screen 1010, based on the PIP layout.

The electronic device according to an embodiment may display a list of one or more functions applicable to each of the contents by using a portion 1011 within the screen 1010. The list displayed by the electronic device within the portion 1011 may include other functions that are distinguished from a function (e.g., the visual objects 552 and 556 of FIG. 5) collectively applied to synchronized contents. For example, the electronic device may display at least one of a visual object for executing a function of adjusting a positional relationship of the areas 1013 and 1015, a visual object for executing a function of changing aspect ratio of each of the areas 1013 and 1015, a visual object for executing a function of changing a border line of each of the areas 1013 and 1015, or a visual object for executing a function of adjusting a color and/or brightness of any one of videos of contents corresponding to the areas 1013 and 1015.

The electronic device according to an embodiment may display one or more visual objects for controlling reproduction of contents displayed on the areas 1013 and 1015 by using a portion 1012 within the screen 1010. The electronic device may display the portion 1012 similar to the portion 540 of FIG. 5. The electronic device may reproduce a preview related to coupling of the contents, before merging the contents displayed on the screen 1010, by using the portion 1012.

The electronic device according to an embodiment may display visual objects 1014 and 1016 for selectively adjusting audio signals of contents corresponding to the areas 1013 and 1015 within the screen 1010. Referring to FIG. 10, the electronic device may display visual objects 1014 and 1016 on an edge and/or a border line of each of the areas 1013 and 1015. A user input received through each of the visual objects 1014 and 1016 may cause the electronic device to adjust the volume of an audio signal of content corresponding to a visual object selected by the user input.

The electronic device according to an embodiment may display visual objects 1017 and 1018 for merging contents displayed on the screen 1010 within the screen 1010. For example, the visual object 1017 may correspond to a function for transmitting another content generated by merging the contents to one or more external electronic devices and/or one or more users. For example, the visual object 1018 may correspond to a function for storing the other content within a memory of the electronic device. The other content generated based on the visual objects 1017 and 1018 may be associated with the preview provided through the screen 1010.

In a state of displaying the screen 1010 for changing out-of-synchronized contents, the electronic device according to an embodiment may display another screen for segmenting each of the contents. For example, in response to receiving a user input for selecting any one of the areas 1013 and 1015, the electronic device may display another screen for segmenting content corresponding to an area selected by the user input. In an example of FIG. 10, in response to receiving a user input for touching and/or clicking on the area 1015, the electronic device may display a screen 1020 for changing content corresponding to the area 1015. The screen 1020 may be a screen that the electronic device changes and displays at least a portion of the screen 1010.

Referring to FIG. 10, within the screen 1020, the electronic device may display a visual object 1021 including a handle for adjusting a size and/or a position of the area 1015. In response to identifying a user input (e.g., a drag gesture initiated on visual object 1021) associated with the visual object 1021, the electronic device may adjust the size and/or position of the area 1015 within the screen 1020 based on the identified user input.

Referring to FIG. 10, within the screen 1020, the electronic device may display a visual object 1022 for displaying another screen for segmenting content corresponding to the area 1015. The visual object 1022, For example, may include a preset icon such as scissors. In response to identifying a user input selecting the visual object 1022, the electronic device may display a screen 1030 for segmenting the content corresponding to the area 1015. The screen 1030 may be a screen that the electronic device changes and displays at least a portion of the screen 1020, or that overlaps and displays at least the portion of the screen 1020.

The electronic device according to an embodiment may display a timeline corresponding to content corresponding to the area 1015 within a portion 1031 of the screen 1030. The timeline may include a plurality of thumbnails corresponding to each of different timings of a video of the content corresponding to the area 1015. The electronic device may display visual objects 1032 and 1033 for indicating a time section to be used for segmenting the content by overlapping them on the timeline. In response to identifying a user input (e.g., a gesture for dragging any one of the visual objects 1032 and 1033 on the timeline) associated with the visual objects 1032 and 1033, the electronic device may adjust a position of at least one of the visual objects 1032 and 1033 on the timeline based on the user input.

The electronic device according to an embodiment may display a visual object 1034 for performing segmentation of a content based on the visual objects 1032 and 1033 on a timeline and a visual object 1035 for switching to the screen 1020 independently of the segmentation. For example, that the electronic device segments the content corresponding to the area 10105 based on the visual objects 1032 and 1033 adjusted within the screen 1030 may be performed in response to identifying a user input selecting the visual object 1034. In response to identifying the user input selecting the visual object 1034, the electronic device may segment the content based on a time section distinguished by the visual objects 1032 and 1033 within the timeline. After segmenting the content according to the user input, the electronic device may display a result of segmenting the content based on at least one of the screens 1010 and 1020.

As described above, the electronic device according to an embodiment may identify whether contents are synchronized with each other based on time sections in which the contents are shot and/or a post-processing function applied to at least one of the contents. When the contents are synchronized with each other, the electronic device may support a function of collectively changing the contents. The user of the electronic device may obtain a single content in which the contents are merged, after collectively changing the contents.

FIG. 11 is a flowchart for describing an operation performed by an electronic device according to an embodiment. The electronic device of FIG. 11 may correspond to an example of the electronic device of FIGS. 1 to 10. The operation of FIG. 11, for example, may be performed by the electronic device 101 of FIG. 1 and/or the processor 110 of FIG. 1.

Referring to FIG. 11, in an operation 1110, the electronic device according to an embodiment may receive a request to change content stored in a memory and obtained based on a shooting input. The contents, for example, may be obtained by the electronic device by using a single shooting input based on the operation of FIGS. 2A to 2B. In a state of displaying a screen for reproducing any one of the contents obtained by using the single shooting input such as the screens 320 and 330 of FIG. 3, the electronic device may receive a request for changing all of the contents. For example, the request may be identified based on a user input for selecting the visual object 342 of FIG. 3.

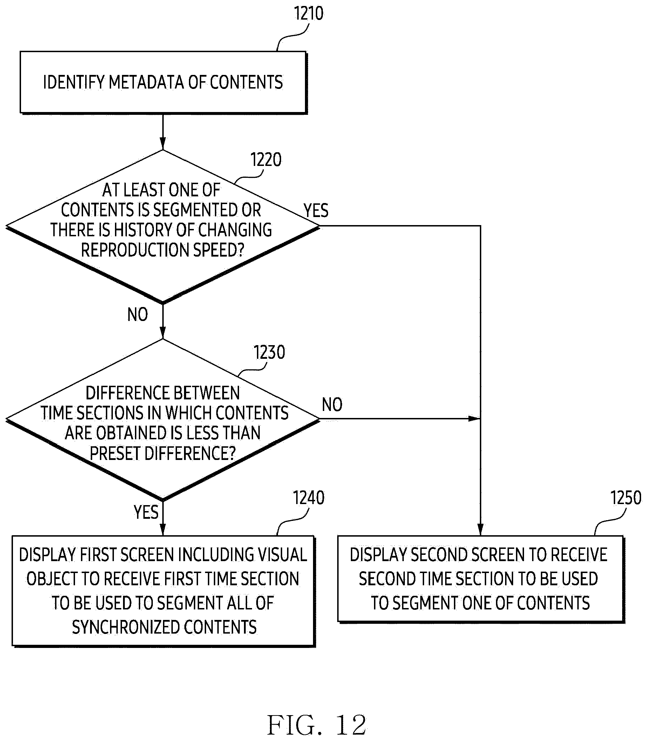

Referring to FIG. 11, in an operation 1120, the electronic device according to an embodiment may determine whether contents corresponding to a request of the operation 1110 are synchronized. The electronic device may determine whether contents are synchronized, by using metadata corresponding to each of the contents. For example, when each metadata of the contents includes information indicating that the contents are obtained based on a single shooting input, the electronic device may determine that the contents are synchronized. For example, in case that a difference between time sections, identified by each metadata of the contents, and in which each of the contents is obtained is less than a preset difference, the electronic device may determine that the contents are synchronized. For example, in case of including information included in each of the metadata of the contents and indicating that one or more electronic devices obtaining the contents are synchronized, the electronic device may determine that the contents are synchronized. For example, based on the similarity of the audio signals of the contents, the electronic device may determine that the contents are synchronized. As described later in FIG. 12, the electronic device according to an embodiment may determine whether the contents are synchronized based on whether at least one of the contents is distorted within the time domain by the post-processing function.

In a state of identifying that the contents are synchronized (1120-YES), in operation 1130, the electronic device according to an embodiment may display a first screen including a visual object for receiving a first time section to be used for segmenting all of the synchronized contents. The first screen, for example, may include the screen 510 of FIG. 5, the screens 710 and 720 of FIGS. 7A to 7B, and/or the screen 810 of FIG. 8. For example, the visual object for receiving the first time section, such as the visual object 552 of FIG. 5, may include a visual object for displaying a screen(e.g., the screens 710 and 720 of FIGS. 7A to 7B and/or the screen 810 of FIG. 8) for collectively segmenting synchronized contents. For example, the visual object for receiving the first time section may include a timeline (e.g., a single timeline corresponding to all synchronized contents) included in the portion 712 of the screen 710 of FIG. 7A and a timeline within one or more visual objects 714 and 716. In response to identifying the first time section from a user through the first screen, the electronic device may segment and/or trim all of the synchronized content based on the identified first time section.

In a state of identifying that contents correspond to another state different from a synchronized state (1120-NO), in operation 1140, the electronic device according to an embodiment may display a second screen for receiving a second time section to be used for segmenting any one of the contents. The second screen, for example, may include the screens 1010, 1020, and 1030 of FIG. 10. A visual object for receiving the second time section may include, for example, a timeline included in the visual object 1022 of FIG. 10 and/or the portion 1031 of the screen 1030. In response to identifying the second time section from a user through the second screen, the electronic device may selectively segment and/or trim any one of the contents based on the identified second time section.

The first screen and the second screen of operations 1130 and 1140 may correspond to an example of a screen for merging and/or changing the contents of operation 1110. For example, the first screen and the second screen may include a visual object corresponding to a function of merging the contents, such as the visual object 580 of FIG. 5 and/or the visual object 1018 of FIG. 10. In response to receiving a user input for selecting the visual object, the electronic device may obtain a single content in which the contents are simultaneously reproduced, by merging the segmented contents based on the operations of FIG. 11 to obtain a single content in which the contents are simultaneously reproduced.

FIG. 12 is a flowchart for describing an operation performed by an electronic device according to an embodiment to determine whether contents are synchronized based on metadata of contents. The electronic device of FIG. 12 may correspond to an example of the electronic device of FIGS. 1 to 11. The operation of FIG. 12, for example, may be performed by the electronic device 101 of FIG. 1 and/or a processor 110 of FIG. 1. The operation of FIG. 12, for example, may be associated with the operation 1120 of FIG. 11.

Referring to FIG. 12, in operation 1210, the electronic device according to an embodiment may identify metadata of contents. The operation 1210, for example, may be performed by the electronic device receiving a request of operation 1110 of FIG. 11. The metadata may be identified from a preset area of each of files in which the contents are stored. The metadata may include information associated with creation and/or change of content.

Referring to FIG. 12, in operation 1220, the electronic device according to an embodiment may determine whether at least one of the contents is segmented or whether there is a history of changing a reproduction speed. For example, the electronic device may store information indicating that the content is segmented or the reproduction speed is changed, in the metadata. The information may indicate that the content is distorted within a time domain.

In a first state (1220-YES) in which at least one of contents is segmented or there is a history of changing a reproduction speed, in operation 1250, the electronic device according to an embodiment may display a second screen different from a first screen of operation 1240. The electronic device, for example, may perform operation 1250, similar to operation 1140 of FIG. 11.

In a second state (1220-NO) distinguished from the first state, in operation 1230, the electronic device according to an embodiment may determine whether a difference between time sections in which contents are obtained is less than a preset difference. The preset difference may be associated with a time difference that occurs when cameras corresponding to each of videos of the contents start shooting based on a single shooting input. For example, the preset difference may be empirically determined based on the time difference. For example, in case that all of the contents are not segmented, and the reproduction speed is not changed, the electronic device may perform a comparison of time sections based on operation 1210.

In case that the difference between the time sections of operation 1230 is less than the preset difference (1230-YES), in operation 1240, the electronic device according to an embodiment may display a first screen based on synchronized contents. The electronic device, for example, may perform operation 1240, similar to operation 1130 of FIG. 11. In case that the difference between the time sections of operation 1230 is greater than or equal to the preset difference (1230-NO), the electronic device may display a second screen based on operation 1250.

Referring to FIG. 12, the electronic device according to an embodiment may display a screen (e.g., the first screen of operation 1240) for collectively changing contents based on a result of comparing the time sections in which the contents are obtained and whether at least one of the contents is distorted within a time domain.

In a state that synchronized contents are obtained by simultaneously controlling a plurality of cameras, a method of changing the synchronized contents may be required.

As described above, according to an embodiment, an electronic device may comprise a display, memory storing one or more instructions, and at least one processor operably coupled to the display, and the memory. The one or more instructions, when executed, may cause the at least one processor to receive a request to change contents obtained based on a shooting input and stored in the memory. The one or more instructions, when executed, may cause the at least one processor to, in response to the receiving the request, identify whether the contents are synchronized based on metadata of the contents. The one or more instructions, when executed, may cause the at least one processor to, in a first state identifying that the contents are synchronized, display a first screen including a visual object to receive a first time section to be used to segment all of the synchronized contents in the display. The one or more instructions, when executed, may cause the at least one processor to, in a second state different from the first state, display a second screen to receive a second time section to be used to segment one of the contents in the display, independent to the visual object. The electronic device according to an embodiment may provide a screen and/or a function for collectively changing synchronized contents.

For example, the one or more instructions, when executed, may cause the at least one processor to, in response to receiving a user input to select the visual object displayed in the first screen, display a timeline corresponding to the synchronized contents. The one or more instructions, when executed, may cause the at least one processor to, in response to identifying the first time section based on another user input associated with the timeline, segment the synchronized contents based on the identified first time section.

For example, the one or more instructions, when executed, may cause the at least one processor to display another visual object to receive a third time section to at least temporarily cease displaying of the first content among the contents, in the first time section distinguished by the timeline, at a portion of the display adjacent to the timeline.

For example, the one or more instructions, when executed, may cause the at least one processor to, display another visual object to adjust all of audio signals included in each of the contents in the first screen, in the first state and display other visual objects to selectively adjust audio signals included in each of the contents in the second screen, in the second state.

For example, the one or more instructions, when executed, may cause the at least one processor to display, in a state displaying within the first screen a first area where a video of a first content among the contents is reproduced and a second area where a video of a second content among the contents is reproduced, the other visual object at an edge of the first area or the second area.

For example, the one or more instructions, when executed, may cause the at least one processor to display, in a state displaying within the second screen a first area where a video of a first content among the contents is reproduced and a second area where a video of a second content among the contents is reproduced, the other visual objects at an edge of the first area or the second area.

For example, the one or more instructions, when executed, may cause the at least one processor to identify that the contents are synchronized, in response to identifying that each of the metadata of the contents includes a first parameter indicating that the contents are simultaneously obtained based on the shooting input, that identifying a difference between time sections when each of the contents indicated by the metadata of the contents was obtained is smaller than a preset difference, or that identifying including of a second parameter indicated by the metadata of the contents and indicating that the electronic device and one or more external electronic devices, which obtain each of the contents, are synchronized when each of the contents were obtained.

For example, the one or more instructions, when executed, may cause the at least one processor to, in response to identifying at least one of a first parameter indicating changing of a reproduction speed of at least one of the contents, or a second parameter indicating segmentation of at least one of the contents, display the second screen associated with the second state different from the first state.

For example, the one or more instructions, when executed, may cause the at least one processor to display icons indicating filters to adjust colors of all of videos of the synchronized contents in the first screen, and in response to receiving a user input selecting one of the icons, adjust the color of all of the videos of the synchronized contents, based on a filter corresponding to an icon selected by the user input.

For example, the one or more instructions, when executed, may cause the at least one processor to, in response to receiving a user input selecting another visual object different from the visual object in the first screen, obtain another content by combining the contents changed based on the first screen, and store the obtained another content in the memory.

As described above, according to an embodiment, a method of an electronic device may comprise receiving a request to change contents obtained based on a shooting input and stored in a memory of the electronic device. The method may comprise, in response to the receiving the request, identifying whether the contents are synchronized based on metadata of the contents. The method may comprise, in a first state identifying that the contents are synchronized, displaying a first screen including a visual object to receive a first time section to be used to segment all of the synchronized contents in a display of the electronic device. The method may comprise, in a second state different from the first state, displaying a second screen to receive a second time section to be used to segment one of the contents in the display.

For example, the displaying the first screen may comprise, in response to receiving a user input to select the visual object displayed in the first screen, displaying a timeline corresponding to the synchronized contents. The displaying the first screen may comprise, in response to identifying the first time section based on another user input associated with the timeline, segmenting the synchronized contents based on the identified first time section.

For example, the displaying the first screen may comprise displaying another visual object to receive a third time section to at least temporarily cease displaying of the first content among the contents, in the first time section distinguished by the timeline, at a portion of the display adjacent to the timeline.

For example, the displaying the first screen may comprise, in the first state, displaying another visual object to adjust all of audio signals included in each of the contents in the first screen. The displaying the second screen may comprise, in the second state, displaying other visual objects to selectively adjust audio signals included in each of the contents in the second screen.

For example, the displaying the first screen may comprise displaying within the first screen a first area where a video of a first content among the contents is reproduced and a second area where a video of a second content among the contents is reproduced, and displaying the other visual object at an edge of the first area or the second area.

For example, the displaying the second screen may comprise displaying a first area where a video of a first content among the contents is reproduced and a second area where a video of a second content among the contents is reproduced, and displaying the other visual objects at an edge of the first area or the second area, within the second screen.

For example, the identifying may comprise identifying that the contents are synchronized in response to identifying that each of the metadata of the contents includes a first parameter indicating that the contents are simultaneously obtained based on the shooting input. The identifying may comprise identifying that the contents are synchronized in response to identifying a difference between time sections when each of the contents indicated by the metadata of the contents was obtained is smaller than a preset difference. The identifying may comprise identifying that the contents are synchronized in response to identifying including of a second parameter indicated by the metadata of the contents and indicating that the electronic device and one or more external electronic devices, which obtain each of the contents, are synchronized when each of the contents were obtained.

For example, the displaying the second screen may comprise, in response to identifying at least one of a first parameter indicating changing of a reproduction speed of at least one of the contents, or a second parameter indicating segmentation of at least one of the contents, displaying the second screen associated with the second state different from the first state.

For example, the displaying the first screen may comprise displaying icons indicating filters to adjust colors of all of videos of the synchronized contents in the first screen. The displaying the first screen may comprise, in response to receiving a user input selecting one of the icons, adjusting the color of all of the videos of the synchronized contents, based on a filter corresponding to an icon selected by the user input.

For example, the displaying the first screen may comprise, in response to receiving a user input selecting another visual object different from the visual object in the first screen, obtaining another content by combining the contents changed based on the first screen. For example, the displaying the first screen may comprise storing the obtained another content in the memory.

The devices described heretofore may be implemented as hardware components, or software components, and/or a combination of the hardware components and the software components. For example, the devices and components described in the embodiments may be implemented using one or more general-purpose or special-purpose of computers, such as e.g., a processor, a controller, an arithmetic logic unit (ALU), a digital signal processor (DSP), a microcomputer, a field programmable gate array (FPGA), a programmable logic unit (PLU), a microprocessor, or any other device capable of executing and responding to instructions. A processing unit/device may execute an operating system (OS) and one or more software applications running on the operating system. Further, the processing unit may access, store, manipulate, process, and generate data in response to execution of the software. For convenience of understanding, although it is sometimes described that a single processing unit is used, one of ordinary knowledge in the art will appreciate that the processing unit may include a plurality of processing elements and/or plural types of such processing elements. For example, the processing unit may include multiple processors or a single processor and at least one controller. Other processing configurations may be also possible, such as a parallel processor.

The software may include computer programs, codes, instructions, or a combination of one or more of the same, and configure a processing unit to operate as desired or command the processing unit independently or collectively. The software and/or data may be embodied in any type of machine, component, physical device, computer storage medium or device for interpretation by the processing unit or providing instructions or data to thereto. The software may be distributed over networked computer systems and stored or executed in a distributed manner. Software and data may be stored in one or more computer-readable recording media.

A method according to various embodiments may be implemented in the form of program instructions that can be executed through various computer means and recorded in a computer-readable medium. In this instance, the medium may be to continuously store the computer-executable program, or to temporarily store the program for execution or download. Further, the medium may be various recording means or storage means in the form of a single or several hardware combined together, which is not limited to a medium directly connected to any computer system and may exist distributed over a network. Examples of the recording media may include a magnetic medium such as e.g., a hard disk, a floppy disk and a magnetic tape, an optical recording medium such as e.g., compact disc read only memory (CD-ROM) and digital versatile disc (DVD), a magneto-optical medium such as e.g., a floptical disk, and those configured to store program instructions, such as e.g., ROM, RAM, flash memory, and the like. In addition, examples of other recording media may include recording media or storage media managed by an app stores distributing applications, websites supplying or distributing various other software, and servers.

As described above, although the exemplary embodiments have been described with reference to some limited embodiments and drawings, various modifications and changes may be made from the above description by those skilled in the art. For example, although the techniques described above are performed in an order different from the described methods, and/or the elements such as the described system, structure, apparatus, circuit, etc. are coupled or combined in a different form than the described method, and/or replaced or substituted by other components or equivalents thereof, an appropriate result can be achieved.

Therefore, any other implementations, alternative embodiments, and/or equivalents to those claims will fall within the scope of the following claims.

## Claims

1. An electronic device, comprising:
a display;
memory storing one or more instructions; and
at least one processor operably coupled to the display, and the memory,
wherein the one or more instructions, when executed, cause the at least one processor to:
receive a request to change contents obtained based on a shooting input and stored in the memory;
in response to the receiving the request, identify whether the contents are synchronized based on metadata of the contents;
in a first state identifying that the contents are synchronized, display a first screen including a visual object to receive a first time section to be used to segment all of the synchronized contents in the display; and
in a second state different from the first state, display a second screen to receive a second time section to be used to segment one of the contents in the display, independent to the visual object.

2. The electronic device of claim 1, wherein the one or more instructions, when executed, cause the at least one processor to:
in response to receiving a user input to select the visual object displayed in the first screen, display a timeline corresponding to the synchronized contents;
in response to identifying the first time section based on another user input associated with the timeline, segment the synchronized contents based on the identified first time section.

3. The electronic device of any one of the preceding claims, wherein the one or more instructions, when executed, cause the at least one processor to:
display another visual object to receive a third time section to at least temporarily cease displaying of the first content among the contents, in the first time section distinguished by the timeline, at a portion of the display adjacent to the timeline.

4. The electronic device of any one of the preceding claims, wherein the one or more instructions, when executed, cause the at least one processor to:
in the first state, display another visual object to adjust all of audio signals included in each of the contents in the first screen; and
in the second state, display other visual objects to selectively adjust audio signals included in each of the contents in the second screen.

5. The electronic device of any one of the preceding claims, wherein the one or more instructions, when executed, cause the at least one processor to:
display, in a state displaying within the first screen a first area where a video of a first content among the contents is reproduced and a second area where a video of a second content among the contents is reproduced, the another visual object at an edge of the first area or the second area.

6. The electronic device of any one of the preceding claims, wherein the one or more instructions, when executed, cause the at least one processor to:
display, in a state displaying within the second screen a first area where a video of a first content among the contents is reproduced and a second area where a video of a second content among the contents is reproduced, the other visual objects at an edge of the first area or the second area.

7. The electronic device of any one of the preceding claims, wherein the one or more instructions, when executed, cause the at least one processor to:
identify that the contents are synchronized in response to:
identifying that each of the metadata of the contents includes a first parameter indicating that the contents are simultaneously obtained based on the shooting input;
identifying a difference between time sections when each of the contents indicated by the metadata of the contents was obtained is smaller than a preset difference; or
identifying that the contents are synchronized in response to identifying including of a second parameter indicated by the metadata of the contents and indicating that the electronic device and one or more external electronic devices, which obtain each of the contents, are synchronized when each of the contents were obtained.

8. The electronic device of any one of the preceding claims, wherein the one or more instructions, when executed, cause the at least one processor to:
in response to identifying at least one of a first parameter indicating changing of a reproduction speed of at least one of the contents, or a second parameter indicating segmentation of at least one of the contents, display the second screen associated with the second state different from the first state.

9. The electronic device of any one of the preceding claims, wherein the one or more instructions, when executed, cause the at least one processor to:
display icons indicating filters to adjust colors of all of videos of the synchronized contents in the first screen; and
in response to receiving a user input selecting one of the icons, adjust the color of all of the videos of the synchronized contents, based on a filter corresponding to an icon selected by the user input.

10. The electronic device of any one of the preceding claims, wherein the one or more instructions, when executed, cause the at least one processor to:
in response to receiving a user input selecting another visual object different from the visual object in the first screen, obtain another content by combining the contents changed based on the first screen;
store the obtained another content in the memory.

11. A method of an electronic device, comprising:
receiving a request to change contents obtained based on a shooting input and stored in a memory of the electronic device;
in response to the receiving the request, identifying whether the contents are synchronized based on metadata of the contents;
in a first state identifying that the contents are synchronized, displaying a first screen including a visual object to receive a first time section to be used to segment all of the synchronized contents in a display of the electronic device; and
in a second state different from the first state, displaying a second screen to receive a second time section to be used to segment one of the contents in the display.

12. The method of any one of the preceding claims, wherein the displaying the first screen comprising:
in response to receiving a user input to select the visual object displayed in the first screen, displaying a timeline corresponding to the synchronized contents;
in response to identifying the first time section based on another user input associated with the timeline, segmenting the synchronized contents based on the identified first time section.

13. The method of any one of the preceding claims, wherein the displaying the first screen comprising:
displaying another visual object to receive a third time section to at least temporarily cease displaying of the first content among the contents, in the first time section distinguished by the timeline, at a portion of the display adjacent to the timeline.

14. The method of any one of the preceding claims, wherein the displaying the first screen comprising:
in the first state, displaying another visual object to adjust all of audio signals included in each of the contents in the first screen; and
wherein the displaying the second screen comprising:
in the second state, displaying other visual objects to selectively adjust audio signals included in each of the contents in the second screen.

15. The method of any one of the preceding claims, wherein the displaying the first screen comprising:
displaying within the first screen a first area where a video of a first content among the contents is reproduced and a second area where a video of a second content among the contents is reproduced; and
displaying the another visual object at an edge of the first area or the second area.
